# EUROPEAN PATENT APPLICATION

(11) **EP 2 485 139 A1**
(43) Date of publication of application: **08.08.2012**
(21) Application number: 12166820.6
(22) Date of filing: 30.01.2007
(51) Int. Cl.: G06F 3/048, G06K 9/00

(54) **Gesturing with a multipoint sensing device**

(30) Priority: 30.01.2006 US 763605 P
(62) Divisional of application: 07709890.3
(71) Applicant: Apple Inc., Cupertino, CA 95014 (US)
(72) Inventor: The designation of the inventor has not yet been filed
(74) Representative: Lang, Johannes

(57) **Abstract**

Methods and systems for implementing gestures with sensing devices are disclosed. More particularly, methods and systems related to gesturing with multipoint sensing devices are disclosed.

## Description

### CROSS-REFERENCE TO RELATED APPLICATIONS

This application claims priority benefit of U.S. Provisional Patent Application No. 60/763,605, filed January 30, 2006, and entitled "GESTURING WITH A MULTIPOINT SENSING DEVICE," which is herein incorporated by reference.

This application is also related to the following patent applications, each of which is herein incorporated by reference:

U.S. Patent Application No. 10/903,964, filed on July 30, 2004, entitled "GESTURES FOR TOUCH SENSITIVE INPUT DEVICES;"

U.S. Patent Application No. 11/015,434, filed on December 17, 2004, entitled "METHOD AND APPARATUS FOR INTEGRATING MANUAL INPUT," which claims priority to U.S. Patent No. 6,323,846, issued on November 27, 2001, which claims priority to U.S. Provisional Patent Application No. 60/072,509 filed January 26, 1998;

U.S. Patent Application No. 10/654,108, filed September 2, 2003, entitled "AMBIDEXTROUS MOUSE;"

U.S. Patent Application No. 10/789,676, filed February 27, 2004, entitled "SHAPE DETECTING INPUT DEVICE,"

U.S. Patent Application No. 10/840,862, filed May 6, 2004, entitled "MULTIPOINT TOUCHSCREEN;"

U.S. Patent Application No. 11/115,539, filed April 26, 2005, entitled "HAND HELD ELECTRONIC DEVICE WITH MULTIPLE TOUCH SENSING DEVICES;"

U.S. Patent Application No. 11/241,839, filed July 30, 2004, entitled "PROXIMITY DETECTOR IN HANDHELD DEVICE;"

U.S. Provisional Patent Application No. 60/658,777, filed March 4, 2005, entitled "MULTI-FUNCTIONAL HAND-HELD DEVICE;"

U.S. Patent Application No. 10/903,964, filed July 30, 2004, entitled "GESTURES FOR TOUCH SENSITIVE INPUT DEVICES;"

U.S. Patent Application No. 11/038,590, filed January 18, 2005, entitled "MODE-BASED GRAPHICAL USER INTERFACES FOR TOUCH SENSITIVE INPUT DEVICES;"

U.S. Patent Application No. 11/048,264, filed January 31, 2005, entitled "GESTURES FOR TOUCH SENSITIVE INPUT DEVICES;"

U.S. Patent Application No. 11/228,737, filed September 16, 2005, entitled "ACTIVATING VIRTUAL KEYS OF A TOUCH-SCREEN VIRTUAL KEYBOARD;"

U.S. Patent Application No. 11/228,758, filed September 16, 2005, entitled "VIRTUAL INPUT DEVICE PLACEMENT ON A TOUCH SCREEN USER INTERFACE;"

U.S. Patent Application No. 11/228,700, filed September 16, 2005, entitled "OPERATION OF A COMPUTER WITH TOUCH SCREEN INTERFACE;"

U.S. Patent Application No. 10/927,925, filed August 26, 2004, entitled "VISUAL EXPANDER;"

U.S. Patent Application No. 10/927,575, filed August 25, 2004, entitled "WIDE TOUCHPAD ON A PORTABLE COMPUTER;"

U.S. Patent Application No. 11/619,553, filed January 3, 2007, entitled "MULTI-TOUCH GESTURE DICTIONARY;" and

U.S. Patent Application No. 11/619,571, filed January 3, 2007, entitled "MULTI-TOUCH GESTURE DICTIONARY."

### BACKGROUND OF THE INVENTION

### 1. Field of the Invention

The present invention relates generally to gesturing associated with multipoint sensing devices.

### 2. Description of the Related Art

There exist today many styles of input devices for performing operations in a computer system. The operations generally correspond to moving a cursor and making selections on a display screen. The operations may also include paging, scrolling, panning, zooming, etc. By way of example, the input devices may include buttons, switches, keyboards, mice, trackballs, touch pads, joy sticks, touch screens and the like. Each of these devices has advantages and disadvantages that are taken into account when designing the computer system.

With touch pads, the movement of the input pointer corresponds to the relative movements of the user's finger (or stylus) as the finger is moved along a surface of the touch pad. Touch screens, on the other hand, are a type of display screen that has a touch-sensitive transparent panel covering the screen. When using a touch screen, a user makes a selection on the display screen by pointing directly to GUI objects on the screen (usually with a stylus or finger). In general, the touch device recognizes the touch and position of the touch and the computer system interprets the touch and thereafter performs an action based on the touch event.

In order to provide additionally functionality, gestures have been implemented with some of these input devices. By way of example, in touch pads, selections may be made when one or more taps are detected on the surface of the touch pad. In some cases, any portion of the touch pad may be tapped, and in other cases a dedicated portion of the touch pad may be tapped. In addition to selections, scrolling may be initiated by using finger motion at the edge of the touch pad.

Unfortunately, gesturing is severely limited by the fact that most touch technologies are only capable of reporting a single point even when multiple objects are placed on the sensing surface. That is, they lack the ability to track multiple points of contact simultaneously. In resistive and capacitive technologies, an average of all simultaneously occurring touch points are determined and a single point which falls somewhere between the touch points is reported. In surface wave and infrared technologies, it is impossible to discern the exact position of multiple touch points that fall on the same horizontal or vertical lines due to masking. In either case, faulty results are generated.

Based on the above, there is a need for multipoint sensing devices and methods of implementing gestures with multipoint sensing devices.

### SUMMARY OF THE INVENTION

The invention relates, in one embodiment, to an electronic system. The electronic system includes a multipoint sensing device that provides a multipoint sensing area for receiving inputs from one or more objects. The electronic system also includes a gesture module configured to determine a gesture set for a given input arrangement received by the multipoint sensing area of the multipoint sensing device, to monitor the given input arrangement for one or more gesture events included in the gesture set, and to initiate input actions associated with a gesture event when the gesture event is performed with the input arrangement. The input arrangement may for example be an arrangement of fingers and/or other parts of the hand.

The invention relates, in another embodiment, to a gestural control method. The method includes detecting multiple points within a sensing area at the same time. The method also includes determining a chord when one or more points are detected within the sensing area. The chord is a specific arrangement of points within the sensing area. The method further includes determining a gesture set associating commands to one or more gesture events. The method additionally includes monitoring points for gesture events. Moreover, the method includes performing command associated with gesture event if a gesture event is recognized.

The invention relates, in another embodiment, to a control operation. The control operations includes detecting a touch or near touch. The operations also includes determining a gesture set for the touch. The gesture set includes one or more gesture events for provoking or initiating a command. The operation further includes monitoring the touch for a gesture event. The operation additionally includes initiating a command when a gesture event associated with the gesture set is performed.

The invention relates, in another embodiment, to a gesture operation. The operation includes monitoring a touch motion. The operation also includes differentiating the touch motion between first and second states. The operation further includes performing a first action if the touch motion is associated with first state. The operation additionally includes performing a second action if motion is associated with second state.

The invention relates, in another embodiment, to a control operation. The control operation includes providing a first input device and a second input device that is different than the first input device. The first input device includes an object sensing device such as a touch sensing device for providing input events. The operation also includes monitoring the first input device for input events. The operation further includes simultaneously monitoring the second input device for input events. The operation additionally includes performing input operations in accordance with input events associated with first input device. Moreover, the method includes simultaneously performing input operations in accordance with input events associated with second input device.

The invention relates, in another embodiment, to a control operation. The control operation provides a list of input functions. The input function have commands and gesture events that are linked to the commands. The commands are related to the input function. The operation also includes assigning input functions to chords. The operation additionally includes linking an input function to a chord when the chord is recognized.

The invention relates, in another embodiment, to a control panel. The control panel includes displaying a menu of input functions. The control panel also includes displaying a gesture set that shows commands associated with a selected input function, and gesture events assigned to the commands. The control operation further includes displaying a list of chords. In order to set up a gesture map, a user selects desired input function from list of input functions and selects a desired chord from the list of chords.

The invention relates, in another embodiment, to a gesture design process. The design process includes providing a list of chords and ranking the chords from easiest to hardest. The design process also includes ranking the frequency of operations from most frequent to least frequent. The design process further includes matching the easiest chords with the most frequent operations, and matching the hardest chords with the least frequent operations. The design process may additionally include fine tuning chord/operation grouping.

The invention relates, in another embodiment, to a gesture operation. The gesture operations includes detecting a first finger. The gesture operation also includes determining the state of the finger. The state of the finger may for example be moving or stationary. The gesture operation further includes detecting one or more additional fingers. For example, a second finger may be detected. The gesture operation additionally includes determining the state of the additional fingers. The state of the additional fingers may for example be that they are present or not. Moreover, the method includes implementing different input modes based on timing of states of first and additional fingers relative to one another. The different modes may for example be pointing modes, dragging modes and the like.

### BRIEF DESCRIPTION OF THE DRAWINGS

The invention will be readily understood by the following detailed description in conjunction with the accompanying drawings, wherein like reference numerals designate like structural elements, and in which:

Fig. 1 is a gesture control operation, in accordance with one embodiment of the present invention.

Fig. 2 is a control operation, in accordance with one embodiment of the present invention.

Fig. 3 is a control operation, in accordance with one embodiment of the present invention.

Fig. 4 is a control operation, in accordance with one embodiment of the present invention.

Fig. 5 is a control operation, in accordance with one embodiment of the present invention.

Fig. 6 is a control operation, in accordance with one embodiment of the present invention.

Fig. 7 is a gesture operation, in accordance with one embodiment of the present invention.

Fig. 8 is a gesture operation, in accordance with one embodiment of the present invention.

Fig. 9 is a gesture operation, in accordance with one embodiment of the present invention.

Fig. 10 is a gesture operation, in accordance with one embodiment of the present invention.

Fig. 11 is a gesture operation, in accordance with one embodiment of the present invention.

Fig. 12 is a gesture operation, in accordance with one embodiment of the present invention.

Fig. 13 is a gesture operation, in accordance with one embodiment of the present invention.

Fig. 14 is a gesture operation, in accordance with one embodiment of the present invention.

Fig. 15 is a gesture operation, in accordance with one embodiment of the present invention.

Fig. 16 is a gesture operation, in accordance with one embodiment of the present invention.

Fig. 17 is a gesture operation, in accordance with one embodiment of the present invention.

Fig. 18 is a gesture operation, in accordance with one embodiment of the present invention.

Fig. 19 is a gesture operation, in accordance with one embodiment of the present invention.

Fig. 20 is a control operation, in accordance with one embodiment of the present invention.

Fig. 21 is a control operation, in accordance with one embodiment of the present invention.

Fig. 22 is a control operation, in accordance with one embodiment of the present invention.

Fig. 23 is a control operation, in accordance with one embodiment of the present invention.

Fig. 24 is a control operation, in accordance with one embodiment of the present invention.

Fig. 25 is a control operation, in accordance with one embodiment of the present invention.

Fig. 26 is a control operation, in accordance with one embodiment of the present invention.

Fig. 27 is a control operation, in accordance with one embodiment of the present invention.

Fig. 28 is a control operation, in accordance with one embodiment of the present invention.

Figs. 29A-G are diagrams of a control panel, in accordance with one embodiment of the present invention.

Fig. 30 is a control operation, in accordance with one embodiment of the present invention.

Fig. 31 is a method of gesture mapping, in accordance with one embodiment of the present invention.

Fig. 32 is a gesture mapping method, in accordance with one embodiment of the present invention.

Fig. 33 is a method of gesture feedback, in accordance with one embodiment of the present invention.

Fig. 34 is a diagram of a gesture viewing window, in accordance with one embodiment of the present invention.

Fig. 35 is a keyboard method implemented via a touch screen, in accordance with one embodiment of the present invention.

Fig. 36 is on example of a gesture design process, in accordance with one embodiment of the present invention.

Fig. 37 shows a matrix for rating chords, in accordance with one embodiment of the present invention.

Fig. 38 shows a matrix for ranking frequency of operations for a few operations, in accordance with one embodiment of the present invention.

Fig. 39 is a control operation, in accordance with one embodiment of the present invention.

Fig. 40 is a control operation, in accordance with one embodiment of the present invention.

Fig. 41 is a control operation, in accordance with one embodiment of the present invention.

Fig. 42 is a diagram of a gesture map, in accordance with one embodiment of the present invention.

Fig. 43 is a diagram of a gesture map, in accordance with one embodiment of the present invention.

Fig. 44 is a diagram of a gesture map, in accordance with one embodiment of the present invention.

Fig. 45 is a diagram of a gesture set, in accordance with one embodiment of the present invention.

Fig. 46 is a diagram of a gesture set, in accordance with one embodiment of the present invention.

Fig. 47 is a diagram of a gesture set, in accordance with one embodiment of the present invention.

Fig. 48 is a diagram of a gesture set, in accordance with one embodiment of the present invention.

Fig. 49 is a gesture operation, in accordance with one embodiment of the present invention.

Fig. 50 is a gesture operation, in accordance with one embodiment of the present invention.

Fig. 51 is a gesture operation, in accordance with one embodiment of the present invention.

Fig. 52 is a gesture operation, in accordance with one embodiment of the present invention.

Fig. 53 is a gesture operation, in accordance with one embodiment of the present invention.

Fig. 54 is a block diagram of an electronic system, in accordance with one embodiment of the present invention.

### DETAILED DESCRIPTION OF THE INTENTION

Gestures and methods of implementing gestures with sensing devices are disclosed. More particularly, gestures and methods of implementing gestures with multipoint sensing devices are disclosed. Multipoint sensing devices have a number of advantages over conventional single point devices in that they can distinguish more than one object (finger) simultaneously or near simultaneously. In most cases, multipoint sensing devices and systems that utilize such devices monitor a surface for a touch or near touch event. When such an event occurs, it can determine the distinct area(s) of contact and identify the nature of the events via their geometric features and geometric arrangement. Once identified, the touch or near touch events are monitored to determine if they correspond to various gestures events.

A gesture event may be defined as a stylized interaction with the sensing surface mapped to one or more specific computing operations. Gesture events may be made through various hand, and more particularly digit, motions, taps, pressures, dwells, and/or the like. Because the surface is based on multipoint technology, complex gesturing may be performed with any number of digits or other contact portions of the hand. In fact, because of this, a large gesture language analogous to sign language may be developed. Gesture language (or map) may include for example a set of instructions that recognize an arrangement of contacts (e.g., chords), recognizes the occurrence of gesture events (e.g., motions), and informs one or more software agents of the gesture events and/or what action(s) to take in response to the gesture events. Examples of multipoint gesturing may for example be found in U.S. Patent Application Nos. 10/903,964, 11/038,590, and 11/015,434, which are all herein incorporated by reference.

A wide range of different gestures can be utilized with multipoint sensing devices. For example, a gesture may be a single point or a multipoint gesture; a static or dynamic gesture; a continuous or segmented gesture; and/or the like. Single point gestures are those gestures that are performed with a single contact point, e.g., the gesture is performed with a single touch as for example from a single finger, a palm or a stylus. Multipoint gestures are those gestures that can be performed with multiple points, e.g., the gesture is performed with multiple touches as for example from multiple fingers, fingers and palms, a finger and a stylus, multiple styli and/or any combination thereof. Static gestures may be those gestures that do not substantially include gesture events (e.g., chords), and dynamic gestures may be those gestures that do include significant gesture events (e.g., motions, taps, etc.). Continuous gestures may be those gestures that are performed in a single stroke, and segmented gestures may be those gestures that are performed in a sequence of distinct steps or strokes. Although several examples are given herein, it should be appreciated that this is by way of example and not by way of limitation.

Multipoint sensing devices can be embodied in various forms including but not limit to standard sized touch pads, large extended palm pads, touch screens, touch sensitive housings, etc. Furthermore, multipoint sensing devices can be positioned on many form factors including but not limited to tablet computers, laptop computers, desktop computers as well as handheld computing devices such as media players, PDAs, cell phones, and the like. The multipoint sensing devices may also be found on dedicated input devices such as touch screen monitors, keyboards, navigation pads, tablets, mice, and the like. Examples of multipoint sensing devices may be found in U.S. Patent Application Nos.: 10/840,862, 10/927,575, which are all herein incorporated by reference.

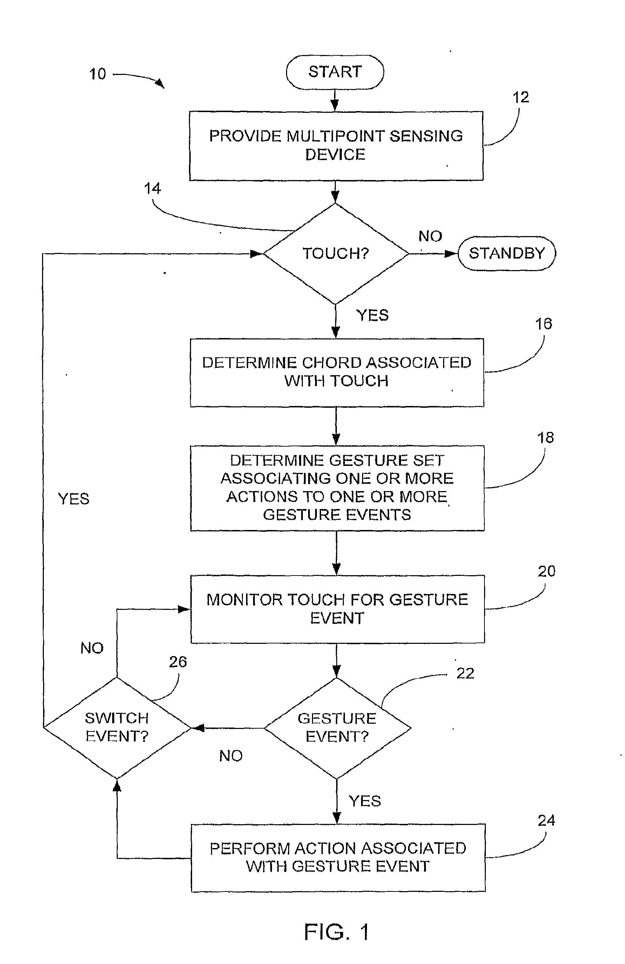

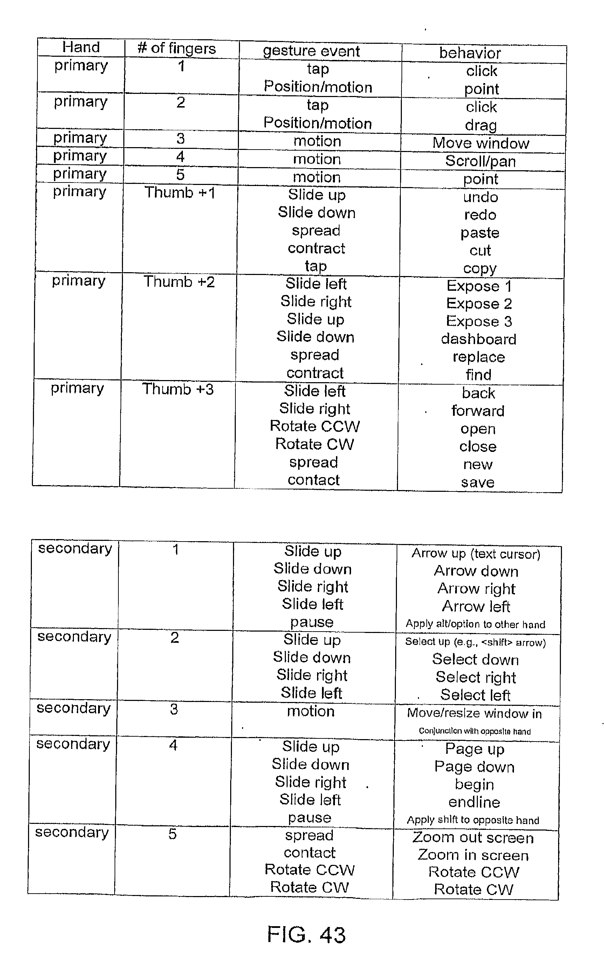

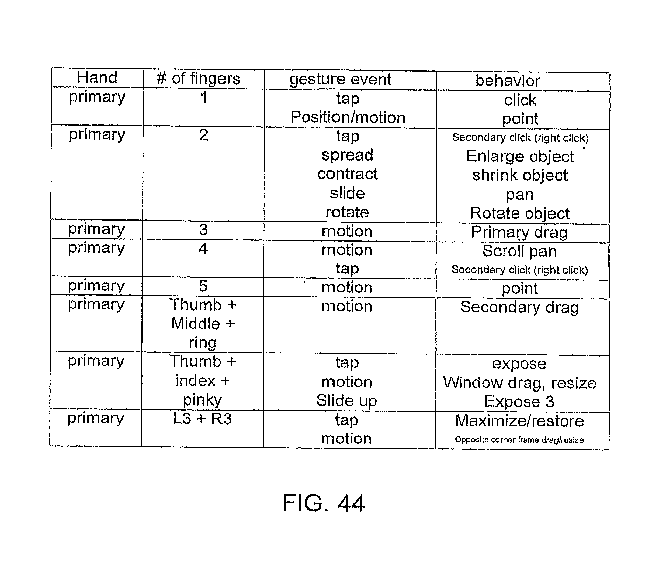

Several embodiments will now be discussed below with reference to Figs. 1-54. However, those skilled in the art will readily appreciate that the detailed description given herein with respect to these figures is for explanatory purposes as the invention extends beyond these limited embodiments.

Fig. 1 shows illustrative gesture control operation 10, in accordance with one embodiment of the present invention. The operation 10 may begin at block 12 where a multi-point sensing device is provided. The multi-point sensing device is capable of detecting multiple points of contact or near contact at the same time. The multi-point sensing device may for example include a multi-touch sensing surface capable of simultaneously sensing multi objects on the its touch surface. Alternatively or additionally, the multipoint sensing device may include capabilities for sensing objects in close proximity to a surface but not touching the surface (e.g., proximity sensing). The multi-point sensing device may be embodied as a touch screen, touch pad, a touch sensing palm rest, touch sensitive housing and/or the like.

Following block 12, the operation can proceed to block 14 where a determination is made as to whether or not a touch or near touch is detected by the multi-point sensing device. If a touch is not detected, the operation can wait. If a touch is detected, the operation can proceed to block 16 where a chord associated with the touch is determined. A chord may be a specific arrangement of contacts or near contacts that can be assigned to some input functionality. Generally speaking, when objects are placed near or on a touch sensing surface, contact patches are created and these contact patches form a pattern that can be identified. The pattern can be made with any assortment of objects including for example mechanical features such as styli and signets and/or portions of one or more hands such as finger, thumb, palm, knuckles, etc.

The chord can be widely varied and may depend on many factors including the size of the touch surface, whether the touch surface is a touch screen or touch pad, etc. Furthermore, the chords may be based on the number of unknown contacts or a specific arrangement of known contacts. The chords may be further based on whether the contacts are close together, in a neutral position or spread apart. The chords may be further based on whether the contacts are adjacent or offset one another. The chords may be further based on the whether they are from left and/or right hand.

Determining the chord may include analyzing the touch (image created by objects touching or near touching the touch surface) and recognizing a specific arrangement of contacts. More particularly, the determination may include classifying or identifying the contacts via the geometric features of each contact as well as the geometric arrangement of contacts, and then referring to a database of expected chords (e.g., gesture map). If the arrangement of contacts matches an expected chord then the arrangement of contacts may be presumed to be the expected chord. These steps may also include filtering. For example, some contacts may not actually be part of a chord. For example, in the case of a touch palm pad, contacts formed by the palm may be ignored since they serve as a support base for the digits of the hand (e.g., very awkward to hold palms above touch surface for extended periods of time). In the case of a tablet PC with a touch screen, contacts formed by the thumb of at least one hand may be ignored since they are primarily used to hold the tablet PC.

Examples of one hand chords are shown below in Table 1. It should be appreciated that Table 1 is not an exhaustive list and that it is shown by way of example and not by way of limitation. For example, the palm may be counted as a contact and added to any of the combinations shown in Table 1 to create more chords. It should be further noted that many more chord combinations can be created by combining the list of Table 1 with the same list from the opposite hand. It should also be noted that although there are many combinations some chords may not be feasible for various reasons including ease of use, ergonomics, intuitiveness, etc.

Once the chord has been determined, the operation can proceed to block 18 where a gesture set associating actions to one or more gesture events is determined. A gesture set may be a map that links actions to gesture events. The gesture set may depend on the determined chord, but may also depend on other factors including location of the chord, open application, state or mode of the application, other touch characteristics, etc. In essence, the chord selects an input channel with each channel having a different gesture set associated therewith. In some cases, for organizational purposes and ease of use, the channels are associated with a particular input functionality such as navigating operations, file operations, edit operations, viewing operations, formatting operations, tool operations, web browsing operations, etc. Each of these input functionalities can have an associated set of commands that are tied to gesture events.

The actions may be state commands or manipulative commands. A state command is a single implemented command. Examples of state commands include new, open, close, delete, rename, select all, cut, copy, paste, undo, redo, group/ungroup, italic, bold, underline, previous/next, play/pause, mute, etc. Other examples of state commands include launching a particular program, launching a particular mode of a program, launching a website, opening a tool bar, opening a menu, arrowing, backspace, space, enter, tab, caps lock, functions, zooming, enlarging/reducing, paging, volume, etc. A manipulative command is a command that continuously manipulates the selected object. Examples of manipulative commands include pointing, tracking, dragging, scrolling, panning, zooming, sizing, stretching, paging, volume, etc. It should be appreciated that these examples are not a limitation and that other commands may be used.

As noted above, a gesture event can be any stylized physical action that can be performed on or above the touch surface. Examples of gesture events may include for example motions, taps, pressure changes, dwells, etc. In some cases, the gesture events may be performed by the chord. In other case, the gesture events may be performed by a subset of the chord. In other cases, the gesture events may be performed by new contacts in addition to or separate from the initial chord. Gesture events will be described in greater detail below.

In block 20, the touch can be monitored for gesture events, and in block 22 a determination can be made as to whether or not gesture events are recognized. Recognizing the gesture events may include analyzing the touch characteristics of contacts (contacts associated with the chord and/or new contacts), identifying a specific pattern and referring to the gesture set and its list of expected gesture events. If the pattern matches an expected gesture event then the pattern may be presumed to be the expected gesture event. The touch characteristics may for example include first order consideration such as motion, tapping, change in pressure, dwell, and second order considerations such as speed (absolute or relative), direction (absolute or relative), orientation (absolute or relative), size (absolute or relative), duration (absolute or relative), shape (absolute or relative), length (absolute or relative), and/or the like.

In one embodiment, gesture events can be designed or selected to be distinguishable from other gesture events to prevent cross talk or mistakes in recognizing the gesture event (e.g., typically want gesture events to be easily differentiated from other gesture events).

Again, gesture events may be classified as motion, tapping, pressure, dwell, etc. If motion, the gesture events may exemplified as follows: sliding in any direction, a slow linear swipe to the right, left, up and down; a quick linear flick to the right, left, up and down; a slow rotation clockwise or counter clockwise; a quick rotation clockwise or counter clockwise; contract or expansion of two of more contacts (e.g., spreading and closing separation between contacts). If tap, the gesture events may further be exemplified as follows: ½ tap, full tape, multiple tap, quick tap, slow tap, etc. If pressure, the gesture events may be further exemplified as light press or hard press. If dwell, the gesture events may be further exemplified as long stationary pause or short stationary pause. It should be appreciated that this list is not a limitation and that gesture events may be classified in other ways and orientations. For example, linear motion gestures are not limited to right, left, up and down, and may further include up-right, up-left, down-right, down-left.

The gesture events may be basic or advanced. Basic gestures may be those gestures with one action as for example swipe linear right. Advanced gestures may be those gestures with multiple actions such as swipe linear right followed by a tap or swipe linear right; long pause, swipe linear left; or rotate CCW with increased or decreased pressure. Advanced gestures may include any number of actions. Basic gestures may be used for ease of use and processing complexity reasons.

If a gesture event is recognized, the operation can proceed to block 24 where the action(s) associated with the gesture events are performed. Block 24 may include referring to the gesture set and locating the action(s) associated with the recognized gesture events. Once located, the action(s) can be initiated. If the action is a state command, the command can be initiated each and every time the gesture event is performed (e.g., the gesture event operates like a button). In some cases, the gesture event can be designed to create repetitive state commands. For example, if the user extends or continues the gesture event multiple state commands can be initiated. This may be helpful in a game mode for rapid firing or in an editing mode when undoing work or in a browse mode when flipping through pages. By way of example, if a single undo command is initiated by a quick linear swipe to the right, a repetitive undo command may be initiated by a quick linear swipe followed by a slow linear swipe in one continuous motion (during touch). In this example, the undo command can be repeatedly initiated in accordance with the slow linear swipe (e.g., the undo command is fired every 100 ms during the slow linear swipe). If the action is a manipulative command, the command can be continuously generated during the gesture event (e.g., one to one correspondence between command and gesture event). For example, if the command is scrolling, scrolling can be performed as long as the gesture event is performed and in accordance with the gesture event properties (e.g., speed, direction, etc.).

Following block 24, the operation can proceed to block 26 where a determination is made as to whether or not a switching event has been performed. A switching event can refer to an event that resets the operation or initiates a chord change. The switching event may be implemented in a variety of ways. For example, it may be implemented by removing all contacts for a predetermined amount of time (e.g., lifting hand off of touch surface). It may also be implemented by changing the base chord during the touch (e.g., adding/removing contacts). It may also be implemented by adding/removing contacts from the opposite hand (e.g., placing one or more fingers down with the opposite hand while the other hand is still touching). It may also be implemented by pausing (e.g., if the contacts stay stationary for a preset amount of time). It may also be implemented by a key entry or button click from a standard keyboard or mouse. It may also be implemented via a gesture event. If a switching event has occurred, the operation proceeds back to block 12. If a switching event has not occurred, then the operation proceeds back to block 20.

**Table 1 - One Hand Chord Examples**

| Unknown contacts - standard arrangement (no palm or palm ignored) |
|---|
| Any one finger |
| Any two fingers |
| Any three fingers |
| Any four fingers |
| Thumb + any finger |
| Thumb + any two fingers |
| Thumb + any three fingers |
| Thumb + four fingers |
| |

| Unknown Contacts - varied arrangement (no palm or palm ignored) |
|---|
| Two adjacent fingers |
| Two non adjacent fingers |
| Two adjacent fingers + one non adjacent finger |
| Thumb + two adjacent fingers |
| Thumb + two non adjacent fingers |
| Thumb + two adjacent fingers + one non adjacent finger |
| Any two adjacent fingers closed |
| Any two adjacent fingers spread |
| Any three adjacent fingers closed |
| Any three adjacent fingers spread |
| Four adjacent fingers closed |
| Four adjacent fingers spread |
| Thumb + two adjacent fingers closed |
| Thumb + two adjacent fingers spread |
| Thumb + three adjacent fingers closed |
| Thumb + three adjacent fingers spread |
| Thumb + four adjacent fingers closed |
| Thumb + four adjacent fingers spread |
| |

| Known Contacts (no palm or palm ignored) |
|---|
| Index |
| Middle |
| Ring |
| Pinky |
| Index + Middle |
| Index + Ring |
| Index + Pinky |
| Middle + Ring |
| Middle + Pinky |
| Ring + Pinky |
| Thumb + Index |
| Thumb + Middle |
| Thumb + Ring |
| Thumb + Pinky |
| Thumb + Index + Middle |
| Thumb + Index + Ring |
| Thumb + Index + Pinky |
| Thumb + Middle + Ring |
| Thumb + Middle + Pinky |
| Thumb + Ring + Pinky |
| Index + Middle + Ring |
| Index + Middle + Pinky |
| Index + Ring + Pinky |
| Middle + Ring + Pinky |
| Thumb + Index + Middle + Ring |
| Thumb + Index Middle + Pinky |
| Thumb + Index + Ring + Pinky |
| Thumb + Middle + Ring + Pinky |
| Index + Middle + Ring + Pinky |
| Thumb + Index + Middle + Ring + Pinky |
| |

| Other (palm face down) |
|---|
| Fingers closed fist or wrapped to palm |
| Index + remaining fingers closed fist or wrapped to palm |
| Index + Middle + remaining fingers closed fist or wrapped to palm |
| Index + Middle + Ring + Pinky closed fist or wrapped to palm |
| Thumb + remaining fingers closed fist or wrapped to palm |
| Thumb + Index + remaining fingers closed fist or wrapped to palm |
| Thumb + Index + Middle + remaining fingers closed fist or wrapped to palm |
| Thumb + Index + Middle + Ring + Pinky closed fist or wrapped to palm |
| Thumb + Index + remaining fingers closed fist or wrapped.to palm |
| Thumb + Index + Middle + remaining fingers closed fist or wrapped to palm |
| Thumb + Index + Middle + Ring + Pink closed fist or wrapped to palm |
| |

| Other |
|---|
| Right side of Hand |
| Left Side of Hand |
| Backside of hand |
| Front side of hand (all) |
| |

| Other (knuckles face down - punch) |
|---|
| Fingers closed fist or wrapped to palm |
| Index open + remaining fingers closed fist or wrapped to palm |
| Index open + Middle open + remaining fingers closed fist or wrapped to palm |
| Index open + Middle open + Ring open + Pinky closed fist or wrapped to palm |
| Thumb + Fingers closed fist or wrapped to palm |
| Thumb + Index open + remaining fingers closed fist or wrapped to palm |
| Thumb + Index open + Middle open + remaining fingers closed fist or wrapped to palm |
| Thumb + Index open + Middle open + Ring open + Pinky closed fist or wrapped to palm |

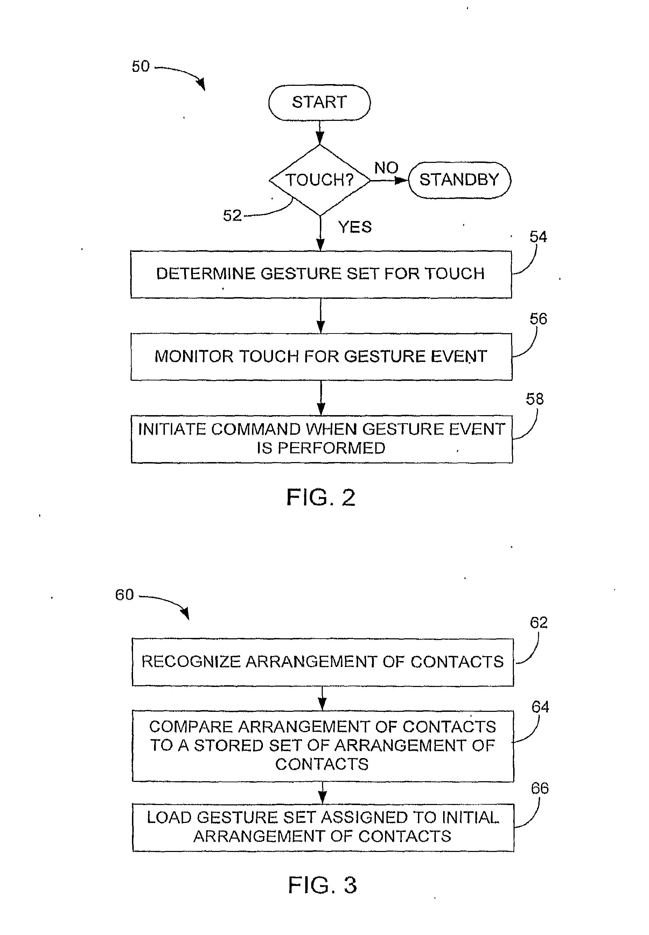

Fig. 2 shows illustrative control operation 50, in accordance with one embodiment of the present invention. The operation may begin at block 52 where a touch or near touch is detected.

Following block 52, the operation can proceed to block 54, where a gesture set is determined for the touch. The gesture set may depend on many factors including touch characteristics, touch location, open application, mode of application, and the like. In most cases, the gesture set is based at least in part on the arrangement of contacts at touchdown.

Following block 54, the operation can proceed to block 56 where the touch is monitored for gesture events associated with the gesture set. The gesture set may include one or more gesture events for provoking or initiating a command (e.g., commands can be tied or linked to specific gesture events).

Following block 56, the operation can proceed to block 58 where one or more commands are initiated when gesture events are performed. For example, a user may slide a specific arrangement of fingers to provoke or initiate a scrolling event.

Fig. 3 shows illustrative control operation 60, in accordance with one embodiment of the present invention. The control operation 60 may for example correspond to block 54 in Fig. 2. The control operation 60 may begin at block 62 where the initial arrangement of contacts are recognized. Thereafter, in block 64, the initial arrangement of contacts can be compared to a stored set of arrangement of contacts. For example, the system may refer to a gesture map that includes a list of initial arrangement of contacts and gesture sets assigned thereto. If there is a match, the operation can proceed to block 66 where the gesture set assigned to the recognized initial arrangement of contacts is loaded.

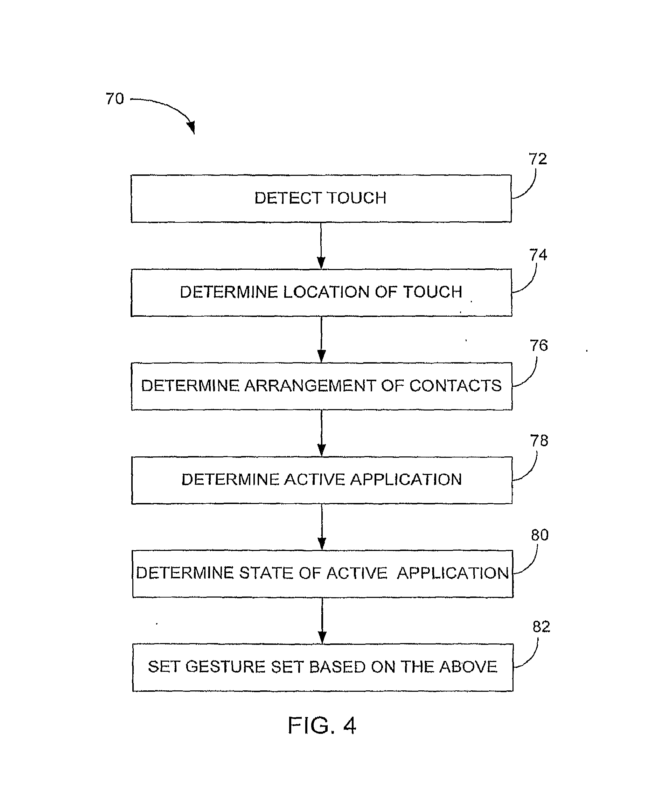

Fig. 4 shows illustrative control operation 70, in accordance with one embodiment of the present invention. The control operation 70 may begin at block 72 where a touch is detected. Thereafter, in block 74, the location of the touch can be determined. Thereafter, in block 76, the arrangement of contacts associated with the touch can be determined (e.g., touch pattern). Thereafter, in block 78, the active application can be determined. Thereafter, in block 80, the current state of the application can be determined (e.g., current mode). Thereafter, in block 82, an appropriate gesture set can be set or selected based on one or more of the determined attributes mention above (blocks 74-80). For example, using the determined attributes, a system may refer to a stored gesture map that links each of the above mentioned attributes to a particular gesture set. The stored gesture map may be created by default or it may customizable by the user. For example, the user may use a control panel to change settings associated with the gesture map or use a training sequence to program the gesture map.

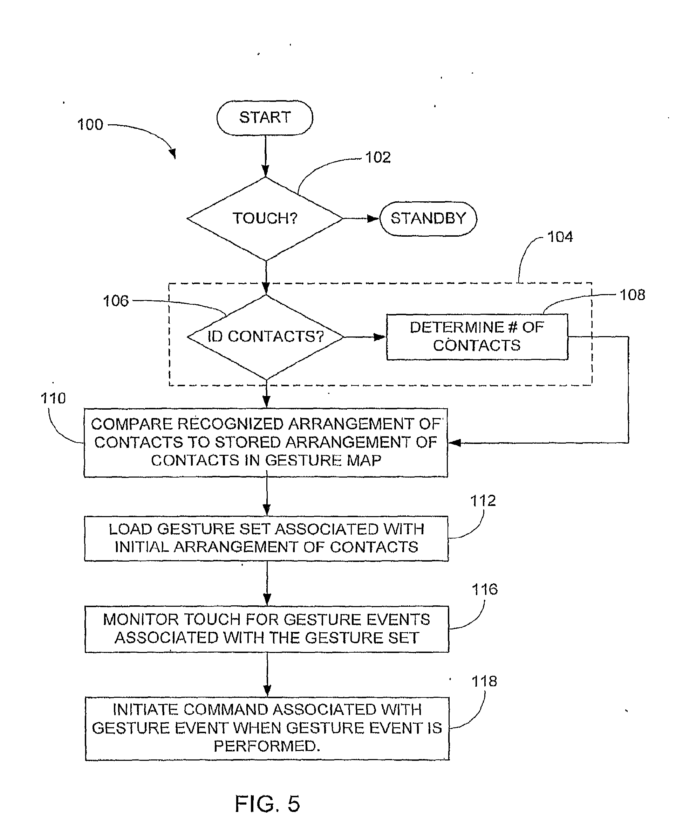

Fig. 5 shows illustrative control operation 100, in accordance with one embodiment of the present invention. The control operation may begin at block 102 where a determination is made as to whether or not a touch is detected. If a touch is detected, the operation can proceed to block 104 where the arrangement of contacts are recognized. Block 104 may include sub blocks 106 and 108. In block 106 a determination is made as to whether the contact patches can be precisely identified. For example, whether a contact patch may be an index finger or thumb or palm. If they cannot be precisely identified, then the operation can proceed to block 108 where the number of contact patches are determined. For example, whether there are two contact patches, three contact patches, etc. Following block 104, the operation can proceed to block 110 where the recognized arrangement of contacts are compared to stored arrangement of contacts in a gesture map. If there is no match, then the operation can proceed back to block 102. If there is a match, then the operation can proceed to block 112 where after referring to the gesture map, the gesture set associated with the initial arrangement of contacts are loaded. Thereafter, in block 116, the touch can be monitored for gesture events associated with the gesture set. If a gesture event is performed, the operation can proceed to block 118 where the command associated with the gesture event is performed,

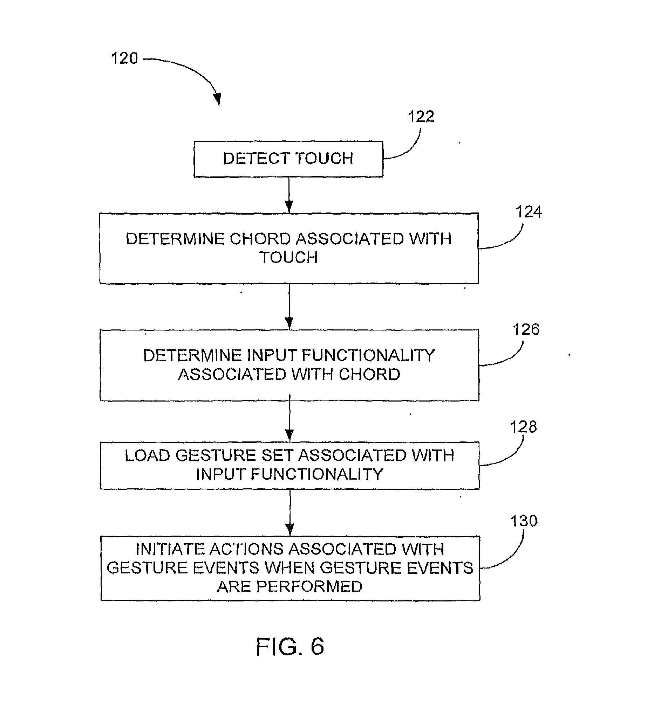

Fig. 6 shows illustrative control operation 120, in accordance with one embodiment of the present invention. The control operation 120 may begin at block 122 where a touch or near touch is detected. Thereafter in block 124 a chord can be determined for the touch. Thereafter, in block 126, the input functionality associated with chord can be determined. The input functionality may describe an operation or group of operations. Examples of operations include navigating operations, file operations, edit operations, viewing operations, insert operations, formatting operations, tool operations, web operations, etc. The input functionality may be further based on environmental conditions including location of chord on touch surface, applications, modes, etc. Thereafter, in block 128 the gesture set associated with the input functionality can be activated or loaded. A gesture set may be a group of gesture events, each of which is assigned to a different action related to the input functionality. The gesture event may be performed solely by the initial chord either as a group, a subset of the group or relative to one another. Alternatively, they may be performed by objects not associated with the chord (e.g., contact patches added after the base chord is set). The gesture event may include first order parameters such as motion, tapping, dwell, pressure and/or the like. The gesture event may also include second order parameters that define the first order parameters such as speed, direction, shape, timing/duration, length, and/or the like. Thereafter, in block 130, actions associated with gesture events can be implemented when gesture events are performed.

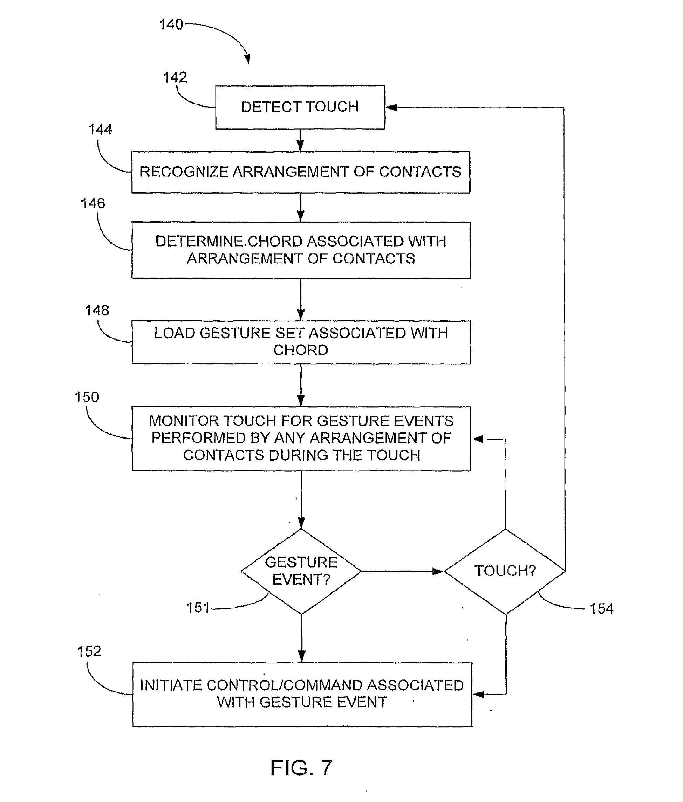

Fig. 7 shows illustrative gesture operation 140, in accordance with one embodiment of the present invention. The operation 140 may begin at block 142 where a touch is detected. Following block 144; the operation can proceed to block 144 where an arrangement of contacts are recognized. Thereafter, in block 146, the chord associated with the recognized arrangement of contacts can be determined. Following block 146, the operation can proceed to block 148 where the gesture set associated with the chord is loaded. The gesture set contains gesture events that can be performed with any arrangement of contacts during the touch. Thereafter, in block 150, the touch can be monitored for a gesture event performed by any arrangement of contacts. If a gesture event has been performed by any arrangement of contacts, the operation can proceed to block 152 where the control/command associated with the gesture event is initiated. If a gesture event has not been performed, the operation can proceed to block 154 where a determination is made as to whether or not a touch is still detected. If a touch is still detected, the operation can proceed back to block 150. If a touch is not detected, the operation can proceed back to block 142. That is, a lift followed by a touch resets the chord and thus the gesture set.

The initial chord selection model described above in Fig. 7 advantageously allows user to pick up or drop additional fingers without affecting the gesture set. This is more ergonomic'in that a user starting in a base chord of two fingers can drop the remaining three fingers so that all five fingers are supporting the hand. As a result, gesturing can be performed for longer periods of time. In essence changes to the base chord are ignored. Furthermore, it allows users to extend pointing/dragging, scrolling etc. in limited space touch surfaces by lifting all but one finger and walking and sliding other fingers toward the target.

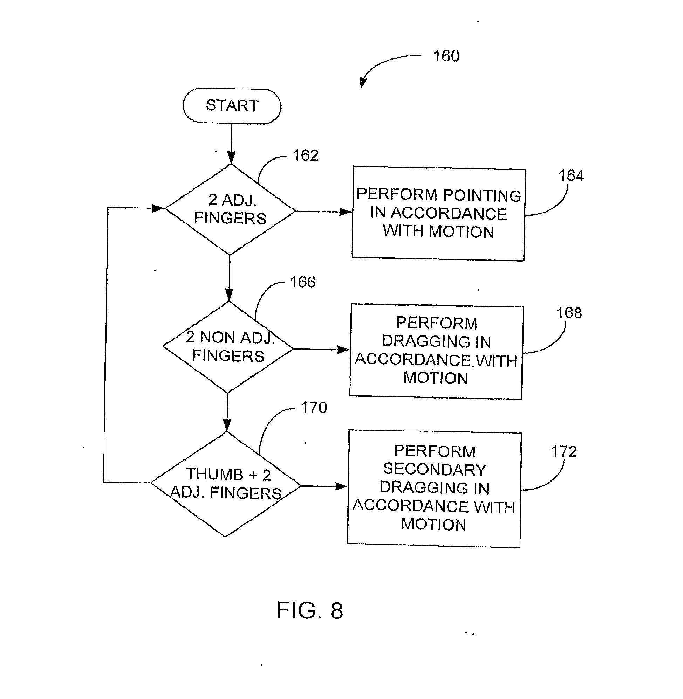

Fig. 8 shows illustrative gesture operation 160, in accordance with one embodiment of the present invention. The operation 160 may begin at block 162 where a determination is made as to whether or not 2 adj acent fingers are detected. If so, the operation can proceed to block 164 where pointing operations are performed in accordance with motion. If not, the operation can proceed to block 166 where a determination is made as to whether or not 3 adjacent fingers are detected. If so, the operation can proceed to block 168 where dragging operations are performed in accordance with motion. If not, the operation can proceed to block 170 where a determination is made as to whether or not a thumb and two adjacent fingers are detected. If so, the operation can proceed to block 172 where secondary dragging operations are performed. If not, the operation can proceed to back to block 162. This process can be reset each and every time all the fingers are lifted off of the touch surface (e.g., touch is no longer detected).

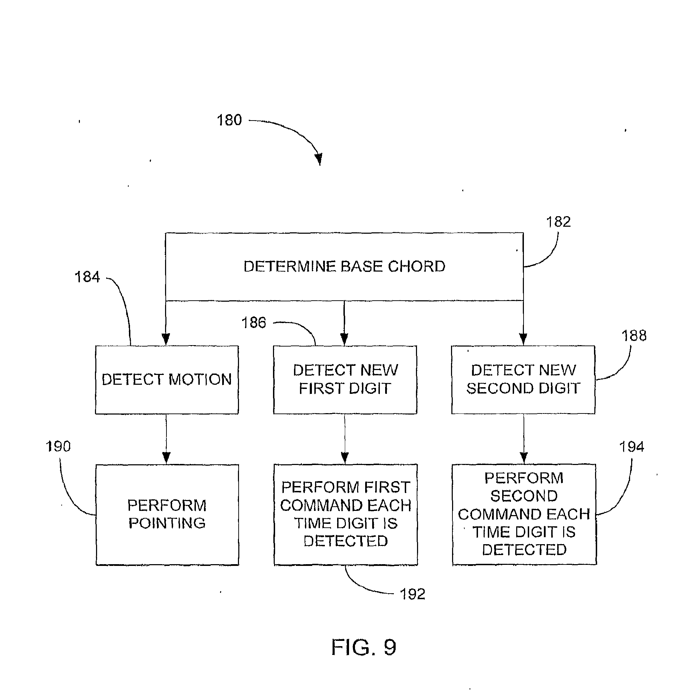

Fig. 9 shows illustrative gesture operation 180, in accordance with one embodiment of the present invention. The operation 180 may begin at block 182 where a base chord is determined. Thereafter, the operation can perform three different processes either separately or simultaneously (parallel blocks 184-188). In block 184, motion can be detected with the base chord. Thereafter, in block 190 pointing operations can be performed in accordance with the motion. In block 186, a new first digit can be detected. That is, a new first digit not associated with the base chord can be detected (in addition to the base chord). Thereafter, in block 192, a first command can be initiated each time the new first digit is detected. In some cases, a user can perform repetitive commands by continuously tapping the new first digit. In block 188, a new second digit can be detected (in addition to the base chord). That is, a new second digit not associated with the base chord can be detected. Thereafter, in block 194, a second command can be initiated each time the new second digit is detected. In some cases, a user can perform repetitive commands by continuously tapping the new second digit or simply holding the digit down. The operation described in Fig. 9 is sometimes referred to as current chord selection model.

In one example of Fig. 9, the base chord can be 3 fingers (either index-middle-ring or thumb-middle-ring). Thus three fingers can be used for pointing operations. Furthermore, the new first digit may be the thumb or index if thumb is already part of base. Thus, the thumb or index can initiate the first command. Moreover, the new second digit may be the pinky. Thus, the pinky can initiate the second command.

The above example may be useful in game modes. The base chord can be used for pointing, first new digit can be used for triggering, and the second new digit can be used for a weapon change. Alternatively, in standard modes, the base chord can be used for pointing, first new digit can be used for primary click and drag, and the second new digit can be used for a secondary click and drag. The three finger support provides sufficient support in both gaming and standard modes.

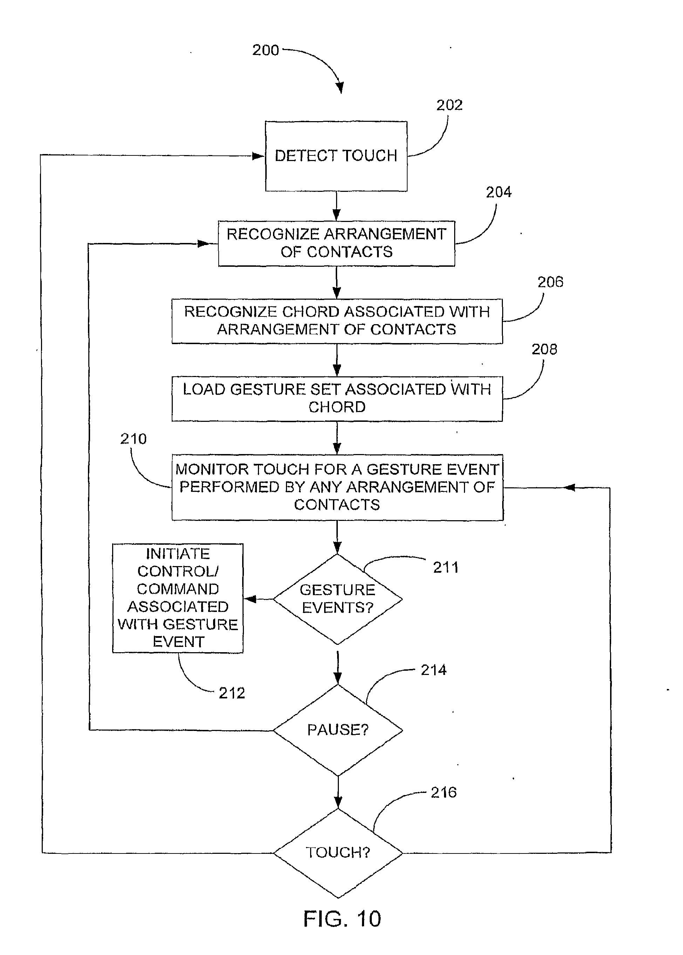

Fig. 10 shows illustrative gesture operation 200, in accordance with one embodiment of the present invention. The operation 200 may begin at block 202 where a touch is detected. Following block 204, the operation can proceed to block 204 where an arrangement of contacts are recognized. Thereafter, in block 206, the chord associated with the recognized arrangement of contacts can be determined, Following block 206, the operation can proceed to block 208 where the gesture set associated with the chord is loaded, The gesture set may contain gesture events that can be performed with any arrangement of contacts during the touch. Thereafter, in block 210, the touch can be monitored for a gesture event performed by any arrangement of contacts. If a gesture event has been performed by any arrangement of contacts, the operation can proceed to block 212 where the control/command associated with the gesture event is initiated. If a gesture event has not been performed, the operation can proceed to block 214 where a determination is made as to whether the base chord or current arrangement of contacts has paused during the touch. If so, the pause can be presumed to be a chord switching event and the operation can proceed back to block 204. If not, the operation can proceed to block 216 where a determination is made as to whether or not a touch is still detected. If a touch is still detected, the operation can proceed back to block 210. If a touch is not detected, the operation can proceed back to block 202.

In the pause selection model described in Fig. 10, switches may only occur if the original fingers are paused or moving pretty slowly. Thus, users can relax from 1 finger into five finger pointing so long as the finger drop is in the middle of a pointing stroke.

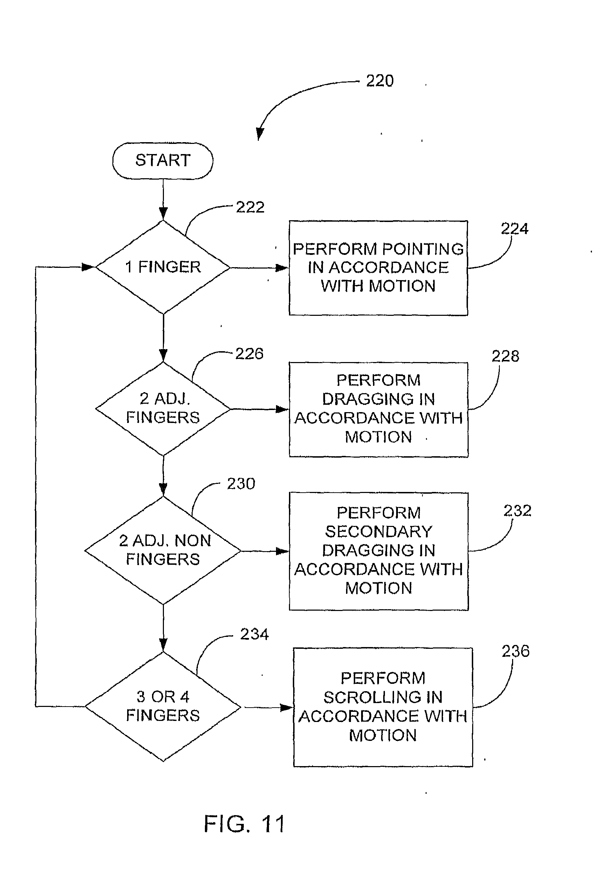

Fig. 11 shows illustrative gesture operation 220, in accordance with one embodiment of the present invention. The operation 220 may begin at block 222 where a determination is made as to whether or not 1 finger is detected. If so, the operation can proceed to block 224 where pointing operations are performed in accordance with motion. If not, the operation can proceed to block 226 where a determination is made as to whether or not 2 adjacent fingers are detected. If so, the operation can proceed to block 228 where dragging operations are performed in accordance with motion. In some cases, drag lock/extend may be initiated by clicking and in other cases it is initiated by dropping the thumb (two adjacent fingers +thumb). If not, the operation can proceed to block 230 where a determination is made as to whether or two non adjacent fingers are detected. If so, the operation can proceed to block 232 where secondary dragging operations are performed. In some cases, drag lock/extend may be initiated by clicking and in other cases it is initiated by dropping the thumb (two non adjacent fingers +thumb). If not, the operation can proceed to block 234 where a determination is made as to whether of not 3 or four fingers are detected. If so, scrolling can be initiated in accordance with motion (block 236). If not the operation can proceed back to block 222. This process can be reset each and every time all the fingers are lifted off of the touch surface (e.g., touch is no longer detected) or if the chord is paused for a moment.

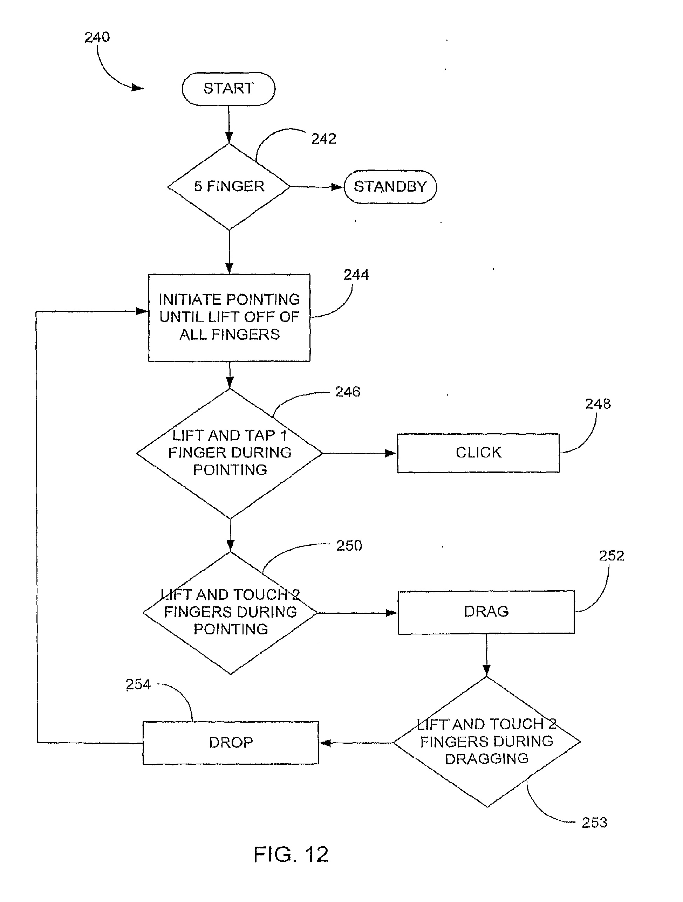

Fig. 12 shows illustrative gesture operation 240, in accordance with one embodiment of the present invention. The operation 240 may begin at block 242 where a determination is made as to whether or not 5 fingers are detected. If so, the operation can proceed to block 244 where pointing is initiated until all fingers are lifted off the touch surface. In block 246, a determination is made as to whether or not 1 of the 5 fingers does a lift and tap during pointing. If so, a click can be performed (block 248). In block 250, determination is made as to whether or not 2 of the 5 fingers does a lift and tap during pointing. If so, a drag can be performed (block 252). Thereafter, in block 253, a determination is made as to whether or not 1 or 2 of the 5 fingers does a lift and tap during dragging. If so, a drop can be performed (block 254). If not, dragging can continue. After blocks 250 and 254, the operation can proceed back to block 244. This process can be reset each and every time all the fingers are lifted off of the touch surface (e.g., touch is no longer detected) or if the chord is paused for a moment.

In an alternative embodiment of Fig. 12, lifting and tapping a left oriented finger of the five finger base chord may initiate a left button click, and lifting and tapping a right oriented finger of the base chord may initiate a right button click.

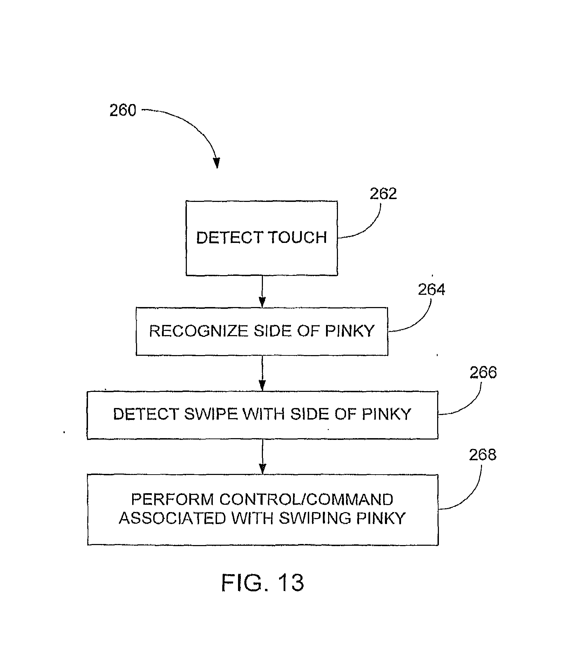

Fig. 13 shows illustrative gesture operation 260, in accordance with one embodiment of the present invention. The operation 260 may begin at block 262 where a touch is detected. Thereafter, in block 264, the side of the pinky can be recognized. The side of the pinky produces a long (highly eccentric) horizontal contact patch distinct from all other contacts (except possibly a flattened thumb). As such, the gesture system may be capable of consistently classifying horizontally eccentric yet thin contacts as a pinky (or possibly a thumb). Thereafter, in block 266, a swipe can be detected with the side of the pinky. Thereafter, in block 268, a control or command associated with the swiping pinky can be performed.

Side pinky swipe may be useful for simple control gestures like volume up/down, sleep, screen saver, etc. The side pinky swipe has the simplicity of single finger touch while being recognizably distinct from normal 1 fingertip pointing/clicking. It is also very ergonomic because while touching with side of pinky, the thumb is pointing straight up into the air. This is the most neutral comfortable of all wrist positions.

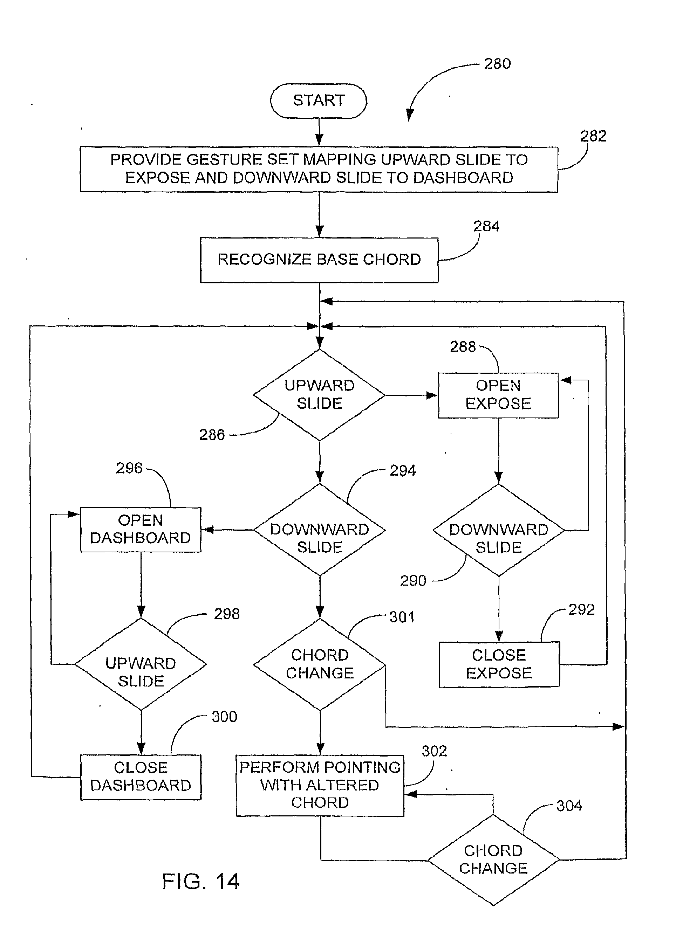

Fig. 14 shows illustrative gesture operation 280, in accordance with one embodiment of the present invention. The operation 280 may begin at block 282 where a gesture set mapping upward slide to Expose and downward slide to Dashboard is provided.

Dashboard is a control panel that includes customizable widgets (mini applications) that bring information to the user instantly - weather forecasts, stock quotes, yellow pages, airline flights, sport scores, etc. In most cases, when activated, the Dashboard is brought into view, and when deactivated, the Dashboard is removed from view. The user is able to receive up to date and timely info from the Internet with a click of a button, and then have it disappear instantly when button is released.

Expose is a window management program. Window management programs are configured to help navigate through or mitigate window clutter (the state where its is difficult to find documents or see the desktop because there are so many open windows and/or applications). Expose may have or be selected from three different modes of operation, which can be controlled by gesturing. The first mode is All Windows or Tile, Scale and Show all. When operating in this mode, all open windows are tiled and scaled so that all the open windows can be seen simultaneously inside the display screen. That is, performing the specified gesture instantly tiles all of the open windows -scales them down and neatly arranges them so that the user can view the contents in each window. The amount of scaling or the rate of scaling may be tied to some characteristic of the gesture as for example pressure or speed. The second mode is Application Windows or Highlight Current Application. This mode works similarly to the first mode except that it only works on a particular application. For example, performing the specified gesture may instantly tile the open windows of a particular application while causing all of the other open application to fade to a shade of grey. The third mode is Desktop or Hide All. In this mode, all of the open windows are moved to the screen edges thereby opening up the desktop. That is, performing the specified gesture may hide all of the open windows giving the user instant access to their desktop.

Thereafter, in block 284, the operations can include recognizing a base chord (e.g., two or more fingers). Thereafter, in block 286, a determination can made as to whether or not an upward slide is detected with the base chord. If so, the operation can proceed to block 288 where Expose all is opened. Thereafter, in block 290, a determination can be made as to whether or not a downward slide is detected with the base chord. If so, the operation can proceed to block 292 where Expose all is closed. Thereafter, the operation can proceed back to block 286. Referring back to block 286, if an upward slide is not detected by the base chord, then the operation can proceed to block 294 where a determination can be made as to whether or not a downward slide is detected with the base chord. If so, the operation can proceed to block 296 where dashboard is opened. Thereafter, in block 298, a determination can be made as to whether or not an upward slide is detected. If so, the operation can proceed to block 300 where Dashboard is closed. Thereafter, the operation can proceed back to block 286. Referring back to block 294, if a downward slide is not detected, the operation can proceed to block 301 where a determination is made as to whether the chord has changed. For example, lifting one finger away. If the chord has been changed, the operation can proceed to block 302 where pointing is performed with the altered chord. Thereafter, in block 304, a determination can be made as to whether or not the chord has been changed back to the base chord. If so, the operation can proceed back to block 286. Gesture operation 280 is sometimes referred to as canceling in opposite direction.

In additional embodiments, the operation shown in Fig. 14 can be modified to include right and left swipes, each of which is associated with a different functionality of Expose.

A static command gesture is a gesture that is performed by simply placing a specific arrangement of contacts on a touch surface. A command is initiated when the specific arrangement of contacts is identified at touch down. There are no gesture events that follow the initial placement. The command is simply generated when the touch is detected. The static command gesture may be analogous to sign language where specific hand arrangements mean different things. In the context of the static command gesture, each hand arrangement (or different arrangement of contacts) initiates a different command.

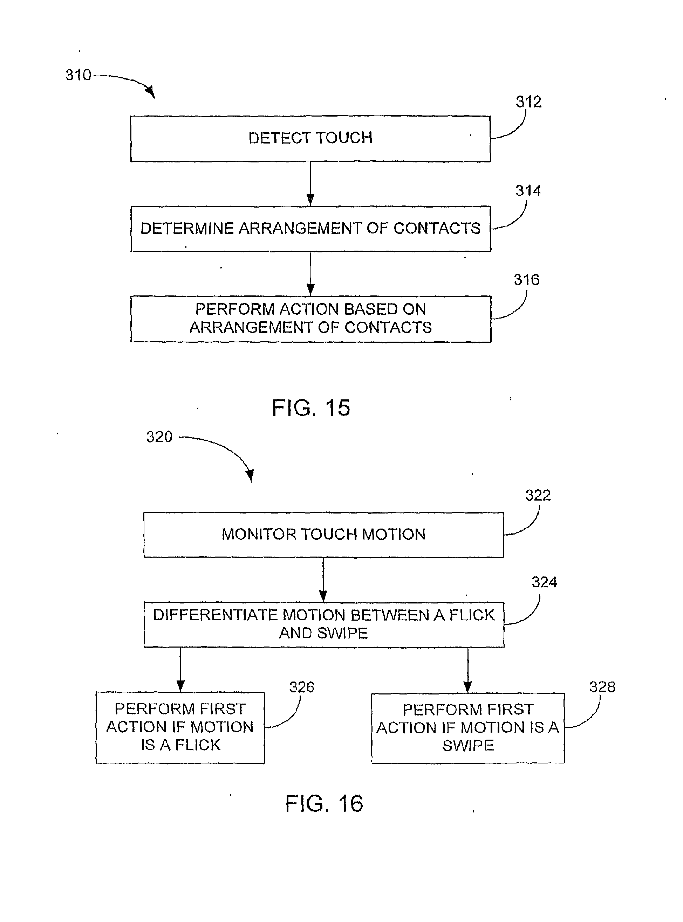

Fig. 15 shows illustrative gesture operation 310, in accordance with one embodiment of the present invention. The gesture operation 310 may begin at block 312 where a touch or near touch is detected on a touch surface. Following block 312, the operation can proceed to block 314 where an arrangement of contact patches associated with the touch is identified. The arrangement of contact patches may be made through one or two hands or alternatively or additionally through elements such as stylus or signets. When the contact patches are created by the hand, they may be made by any portion of the hand including digits, palms, etc, and further by any orientation of the hand, by any position of the digits relative to one another, and by any orientation of digits. As should be appreciated, different hand orientations and different digit positions/orientations will create a different arrangement of contact patches. Examples of different orientations include open hand-face down, open hand face up, open hand side down (thumb up), closed hand - palm down, closed hand - back of hand, closed hand - knuckles, closed hand- side down. Examples of different digit positions include spread, neutral, grouped, etc. Any arrangement of contacts can be envisioned (sign language).

Following block 314, the operation can proceed to block 316 where a command tied to a specific arrangement of contacts is initiated when the specific arrangement of contacts is identified. The commands may be widely varied.

Fig. 16 shows illustrative gesture operation 320, in accordance with one embodiment of the present invention. The gesture operation 320 may begin at block 322 where a touch is monitored for motion. The touch may for example be embodied as a specific arrangement of contacts. If there is motion, the gesture operation can proceed to block 324 where the motion is differentiated between a flick and a swipe. A flick may be a quick short motion. A swipe may be a longer slower motion. If the motion is a flick, then a first action can be performed when the flick is detected (block 326). If the motion is swipe, then a second action can be performed when the swipe is detected (block 328).

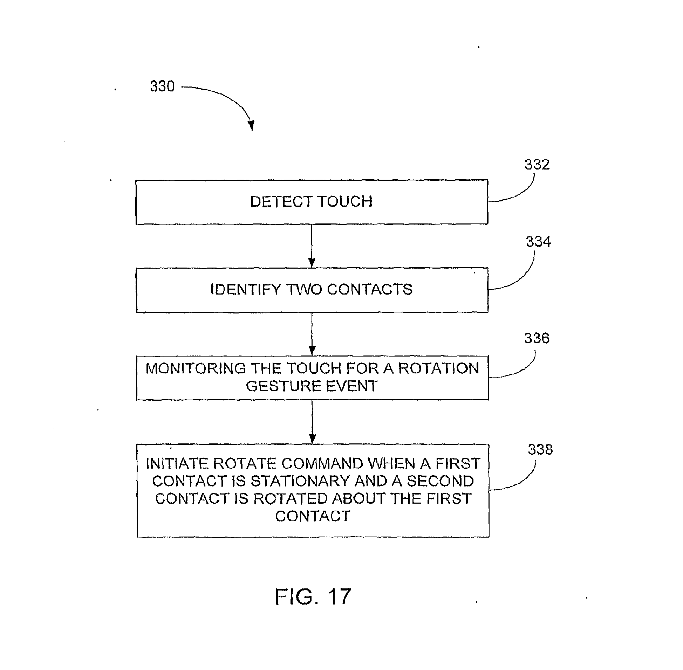

Fig. 17 shows illustrative gesture operation 330, in accordance with one embodiment of the present invention. The gesture operation 330 may begin at block 332 where a touch is detected on a touch surface (e.g., touch pad, touch screen, etc.). Following block 332, the operation can proceed to block 334 where two contacts associated with the touch are identified. Thereafter in block 336, the operation can include monitoring the touch for a gesture event. In block 338, a rotate command can be initiated when a first contact is stationary and the second contact is rotated about the first contact.

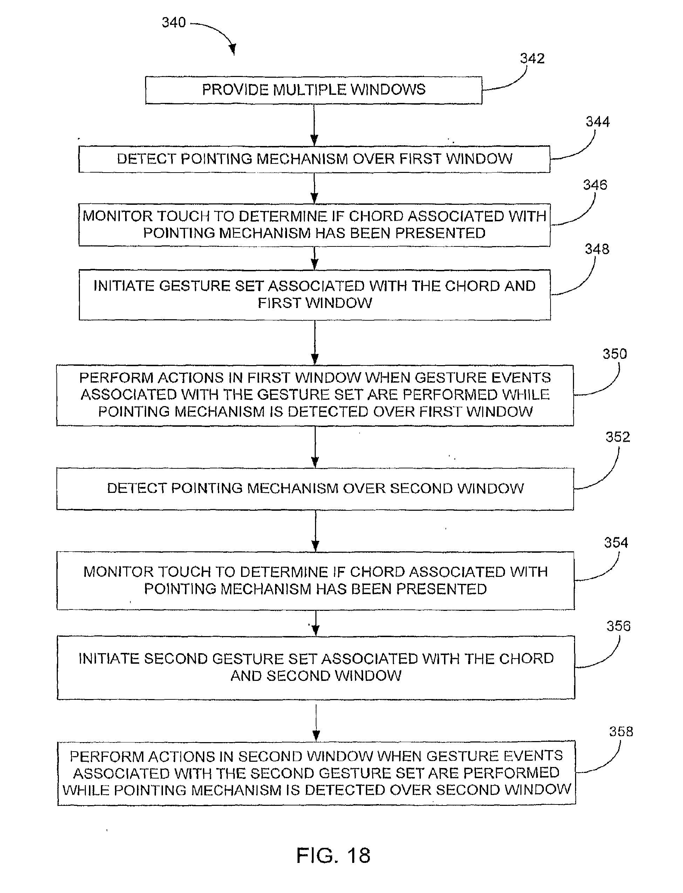

Many users keep multiple windows open an any one time. This allows them to go back and forth between windows as needed. This can be beneficial when copying from one window and pasting in another window. In a typical process, the user would select one of the windows, thereby activating the window and then perform actions within the window. The user would then, select another window, thereby activating the new window and deactivating the old window and then perform actions within the new window. This is clumsy and consists of many steps. In order to overcome this, the present invention provides a method in Fig. 18 that gives the user the ability to go back and forth between windows without activating and deactivating. The windows become active when a pointing mechanism is located over the window. The pointing mechanism may be a pointer or cursor in the case of a touch pad, or a finger in the case of a touch screen.

Fig. 18 shows illustrative gesture operation 340, in accordance with one embodiment of the present invention. The gesture operation 340 includes providing multiple windows 342. For example, the windows may be opened programs on a desktop. Thereafter, in block 344, the operation can include detecting a pointing mechanism over the first window. For example, in the case of a touch pad, the pointing mechanism may be a cursor. In the case of a touch screen, the pointing mechanism may be a finger or group of fingers. Thereafter, in block 346, the touch can be monitored to determine if a chord associated with the pointing mechanism has been presented. In the case of a touch pad, this may be accomplished after the cursor is placed over the window. In the case of a touch screen, this may be accomplished while the finger is positioned over the window. Thereafter in block 348, a gesture set associated with the chord and first window can be initiated (e.g., the gesture set depends on both the chord and window). Thereafter, in block 350, actions can be performed in the first window when gesture events associated with the gesture set are performed on the touch surface. Thereafter, in block 352, the operation can include detecting a pointing mechanism over the second window. This may be accomplished at a different time than block 344 or it may occur simultaneously with block 344. The pointing mechanism may be the same pointing mechanism used for the first window (e.g., the pointing mechanism is moved from one window to the other) or alternatively the pointing mechanism may be a second pointing mechanism (e.g., second cursor or second finger). Thereafter, in block 354, the touch surface can be monitored to determine if a chord associated with the second pointing mechanism has been presented. Thereafter in block 356, a gesture set associated with the chord and second window can be initiated. Thereafter, in block 358, actions can be performed in the second window when gesture events associated with the gesture set are performed on the touch surface.

In one example of Fig. 18, using a touch screen, if a user is performing copy and paste, the user can place their finger(s) from one hand over the first window and select an object to be copied. Thereafter, the user can perform a copy gesture over the first window. The user can also places fingers from a second hand over the second window and select a location for pasting. Thereafter, the user can perform a paste gesture over the second window.

In another example of Fig. 18, using a touch screen, if a user is performing a copy and paste, the user can place their finger(s) from one hand over the first window and select an object to be copied. Thereafter, the user can perform a copy gesture over the first window. The user can then move their hand to the second window. The user can place their fingers over the second window and selects a location for pasting. Thereafter, the user ca perform a paste gesture over the second window.

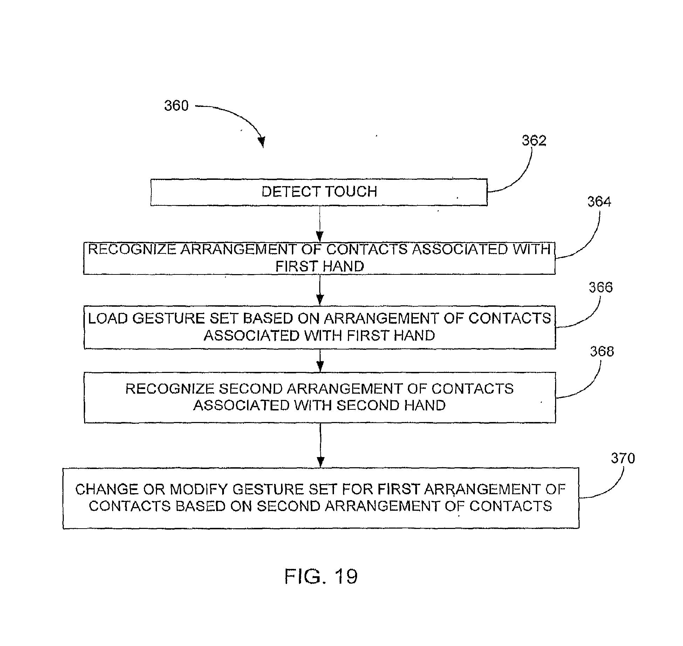

Fig. 19 shows illustrative gesture operation 360, in accordance with one embodiment of the present invention. The gesture operation may begin at block 364 where the arrangement of contacts associated with a first hand are recognized. Following block 364, the operation can proceed to block 366 where a gesture set based on arrangement of contacts associated with the first hand is loaded. Following block 366, the operation can proceed to block 368 where a second arrangement of contacts associated with a second hand are recognized. Following block 368, the operation can proceed to block 370 where the gesture set of the first arrangement of contacts is changed or modified based on the second arrangement of contacts. As should be appreciated, the second hand can be used to swiftly modulate between different gesture sets as needed. This can also allows for a wider range of possible gesture sets. By way of example, if the first hand can provide 5 gestures sets based on number of fingers, and the second hand can provide 5 modifiers based on number of fingers, then 100 gesture sets can be created.

To cite an example of Fig. 19, using a touch pad, the user can place two fingers on the touch pad thereby initiating a gesture set associated with the two fingers. The user can perform gesture events using the two fingers. The user can decide that he needs to perform an action not offered by the two finger gesture set. The user can therefore place two fingers down from the opposite hand. This can load an entirely new gesture set to be performed by the first hand.

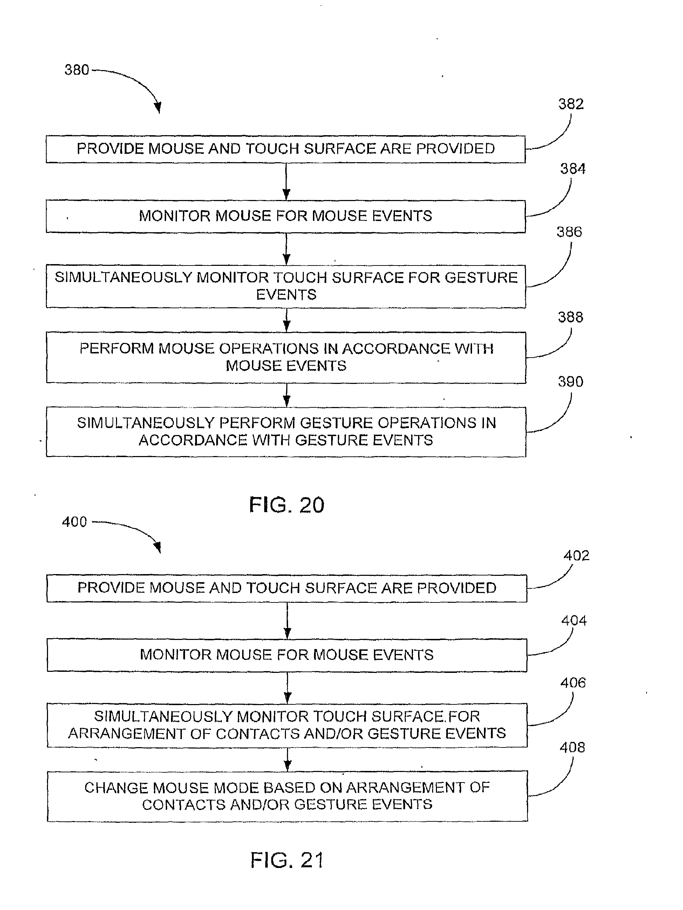

Fig. 20 shows illustrative control operation 380, in accordance with one embodiment of the present invention. The control operation may begin at block 382 where a mouse and touch surface are provided. For example, a mouse may be connected to a laptop computer that includes a touch pad. Following block 382, the operation can proceed to block 384 where the mouse is monitored for mouse events (e.g., moving a cursor, button clicks, scrolling). Simultaneously, in block 386, the touch surface can monitored for gesture events. In block 388, mouse operations can be performed in accordance with mouse events. Simultaneously in block 390, gesture operations can be performed in accordance with gesture events. This method can allow a user to control a mouse with one hand while performing gestures with the opposite hand. The user can therefore be more productive.

In one example of Fig. 20, in a spread sheet program, a user can select cells using the mouse, then perform a copy gesture with the opposite hand on a touch surface. The user can then scroll or pan through the spreadsheet using a scroll or pan gesture. Once a desired location is found, the user can select the desired cells or cell for pasting using the mouse and then perform a paste gesture.

Fig. 21 shows illustrative control operation 400, in accordance with one embodiment of the present invention. The control operation may begin at block 402 where a mouse and touch surface are provided. Following block 402, the operation can proceed to block 404 where the mouse is monitored for mouse events (e.g., moving a cursor, button clicks, scrolling). Simultaneously, in block 406, the touch surface can be monitored for gesture events. Thereafter, in block 408, the mouse mode may be changed based on touch or gesture events performed at the touch surface. For example, the touching hand may be used to modify the functionality of the mouse that is operated with the other hand. By way of example, the presence of a finger on the touch surface may change the mouse from a tracking mode to a scrolling mode.

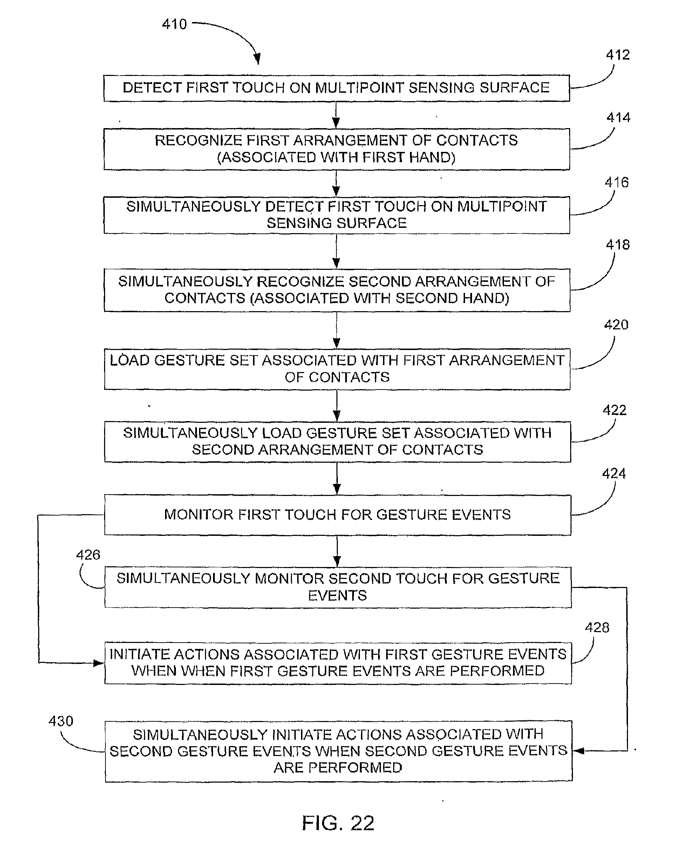

Fig. 22 shows illustrative control operation 410, in accordance with one embodiment of the present invention. The operation may begin at block 412 where a first touch is detected on a touch surface. Following block 412, the operation can proceed to block 414 where the first arrangement of contacts is recognized. This may for example be accomplished with a first hand. Simultaneously, in blocks 416 and 418, a second touch can be detected on the touch surface and a second arrangement of contacts can be recognized. This may for example be accomplished with a second hand. In block 420, the gesture set for the first arrangement of contacts can be loaded. Simultaneously, in block 422, the gesture set for the second arrangement of contacts can be loaded. In block 424; the first touch can be monitored for first gesture events. Simultaneously, in block 426, the second touch can be monitored for second gesture events. In block 428, actions associated with the first gesture events can be implemented when the first gesture events are performed. Simultaneously, in block 430, actions associated with the second gesture events can be implemented when the second gesture events are performed.

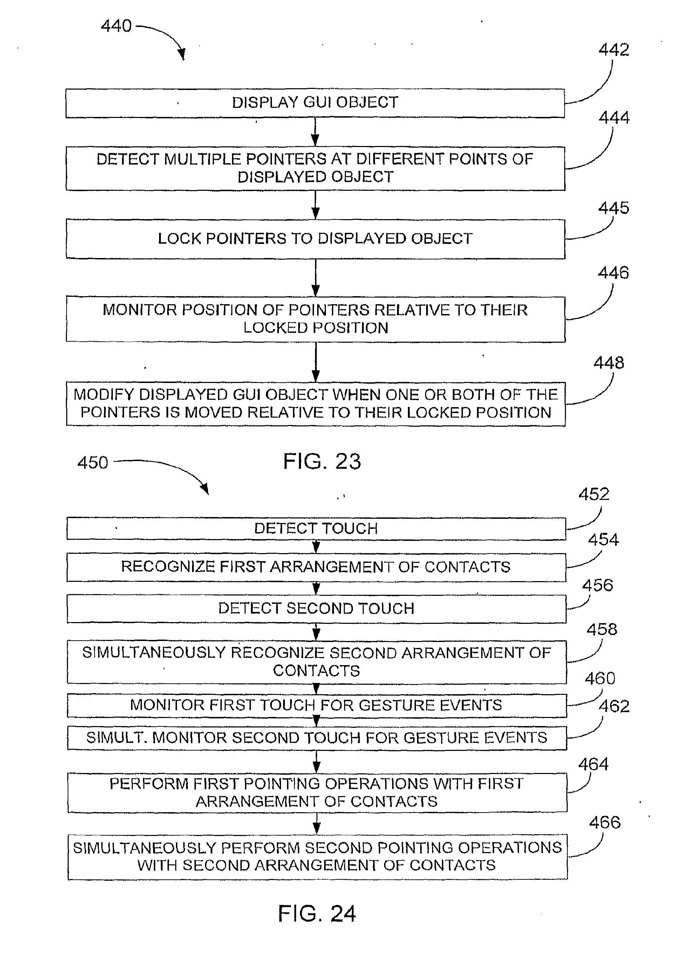

Fig. 23 shows illustrative control operation 440, in accordance with one embodiment of the present invention. The operation 440 may start at block 442 where a GUI object is displayed. Thereafter, in block 444, multiple pointers can be detected at different points of the displayed GUI object. In the case of a touch screen, the first pointers may be finger(s) from a first hand, and the second pointer may be finger(s) from a second hand. In the case of a touch pad, the first pointer may be a cursor controlled by a first hand, and the second pointer may be a cursor controlled by a second hand. Once the pointers are detected, the pointers can be locked to the displayed object in block 445. This may be accomplished by pausing. For example, the user can place the pointers at points on the GUI object and then dwell there until the pointers are locked. Thereafter, in block 446, the position of the pointers can be monitored relative to their locked position. Thereafter, in block 448, the displayed object can be modified when position of one or more pointers is moved relative to its locked position. For example, the attributes of the GUI object including for example orientation, size and shape may be modified.

To cite an example of Fig. 23, in order to rotate an object, the user can place their pointers on the GUI object, and when locked, rotate one or two pointers. The GUI object can follow the rotation of the one or two pointers thereby changing its orientation. In order to change its size, the user can place the pointers on the GUI object and when locked, slide the two pointers together or away from one another. When slid together, the size of the object can be reduced. When slid apart, the size of the object can be increased. In order to change its shape, the user can place the pointers on the GUI object and when locked, slide one pointer up, down, right left. When slid away from the object, the object can be made larger in the direction of the slide. When slid towards the object, the object can be made smaller in the direction of the slide.

Fig. 24 shows illustrative control operation 450, in accordance with one embodiment of the present invention. The operation may begin at block 452 where a first touch is detected on a touch surface. This may for example be accomplished with a first hand. Following block 452, the operation can proceed to block 454 where the first arrangement of contacts associated with the first touch is recognized. Simultaneously, in blocks 456 and 458, a second touch can be detected on the touch surface and a second arrangement of contacts can be recognized. This may for example be accomplished with a second hand. In block 460, the first touch can be monitored for first gesture events. Simultaneously, in block 462, the second touch can be monitored for second gesture events. In block 464, pointing operations associated with the first gesture events can be implemented when the first gesture events are performed. Simultaneously, in block 466, pointing operations associated with the second gesture events can be implemented when the second gesture events are performed.

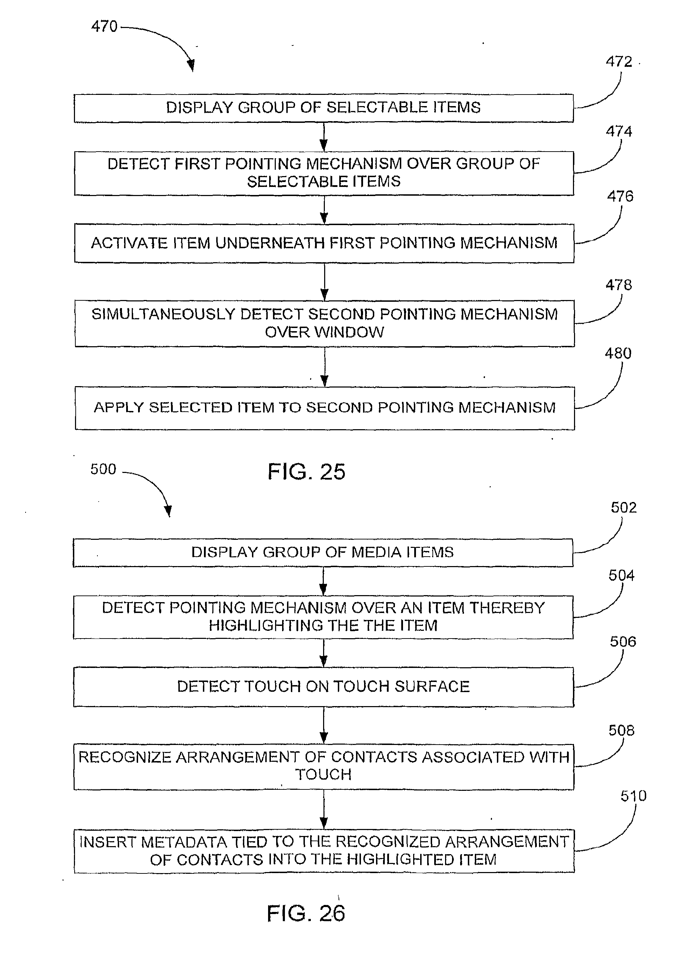

Fig. 25 shows illustrative control operation 470, in accordance with one embodiment of the present invention. The control operation may begin at block 472 where a group of selectable items are displayed. The group of selectable items may for example be a color palette or a tool bar. After block 472, the operation can proceed to block 474 where a first pointing mechanism is detected over the group of selectable items. In the case of a touch screen the pointing mechanism may be a finger or group of fingers. In the case of a touch pad, the pointing mechanism may be a cursor or tool that is controlled by a finger or group of fingers. In block 476, the item underneath the first pointing mechanism can be activated (selected). The activated item may be based on the location of the pointing mechanism. Visual feedback may be provided so that the user has confirmation about their selection. By way of example, the activated item may be highlighted when the first pointing mechanism is positioned over the item. In block 478, a second pointing mechanism can be simultaneously detected over a window (e.g., both pointing mechanism operate at the same time). The window may for example be a canvas in a draw or paint program. In the case of a touch screen the second pointing mechanism may be a finger or group of fingers (from the opposite hand as the first pointing mechanism). In the case of a touch pad, the second pointing mechanism may be a cursor or tool that is controlled by a finger or group of fingers. In block 480, the selected item can be applied to the second pointer mechanism. For example, in the case of a toolbar, the tool functionality of the second pointer mechanism may be based on the selected item. Furthermore, in the case of a touch pad, the tool UI element may change along with the functionality so that the user knows what tool is active (e.g., pencil, paint brush, etc.). In the case of a palette, the output of the second pointer mechanism may be based on the selected item. For example, in the case of painting, when the user selects a color on the palette, the output of the second pointer changes to that color. The user can therefore adjust the color being applied to the canvas on the fly during a painting operation.

Fig. 26 shows illustrative control operation 500, in accordance with one embodiment of the present invention. The control operation may begin at block 502 where a group of media items are displayed. The media items may for example be songs, video clips, movies, photos, games, and the like. The media items may for example be controlled by a media management program. iPhoto and iTunes manufactured by Apple Computer of Cupertino are examples of media management programs. In block 504, a pointer mechanism can be detected over an item thereby highlighting the item. The pointer mechanism may for example be controlled by a mouse or a hand chord (dominant hand). In block 506, a touch can be detected on a touch surface. The touch can be performed by the hand opposite the hand associated with the pointer mechanism. Thereafter, in block 508, the arrangement of contacts associated with the touch can be recognized. Thereafter, in block 510, metadata tied to the recognized arrangement of contacts can bes inserted into the highlighted item. Each of arrangement of contacts may have a different metadata. For example, a single finger may have a first metadata, two finger may have a second metadata, three fingers may have a third metadata, four fingers may have a fourth metadata, five finger may have a fifth meta data, and so on. The metadata for each arrangement of contact may be related to the same functionality or they may have entirely different functionalities.

To cite an example of Fig. 26, the above process may be used to rate or rank media items. For example, a single finger may tie a 1 star ranking to a song, two fingers may tie a 2 star ranking to a song, three fingers may tie a 3 star ranking to a song, four fingers may tie a 4 star ranking to a song, and five fingers may tie a 5 star ranking to a song.

To cite another example of Fig. 26, the above process may be used to identify media items. For example, a single finger may tie a first person (e.g., wife Darcy) to a photo, a second finger may tie a second person (e.g., daughter Halley) to a photo, a third finger may tie a third person (e.g., cousin Camden) to a photo, a fourth finger may tie a forth person (uncle Chance) to a photo, and a fifth finger may tie a fifth person (e.g., grandma Shery) to a photo. Taps can be used to enlarge list. For example, the number of fingers at first touch down can be added to the number of fingers at second touch down to produce final arrangement of contacts. Three fingers followed by two fingers may still mean the fifth person. While five fingers and one finger (6 total fingers) may tie a sixth person (e.g., great grandma Terry) to a photo. Furthermore, five fingers and two fingers may tie a seventh person (e.g., dog Primo) to a photo, five fingers and three fingers may tie an eighth person (friend Lisa) to a photo, five fingers and four fingers may tie a ninth person to a photo , and five fingers and five fingers may tie a tenth person to a photo. Alternatively, the metadata may not be associated with a person but rather some other characteristic of photos (e.g., vacation, California, landscape, family, etc.).

Generally speaking, the media management program may need to be placed in a metadata inserting mode. This can be accomplished conventionally through onscreen controls or alternatively by the chord associated with the pointing mechanism.

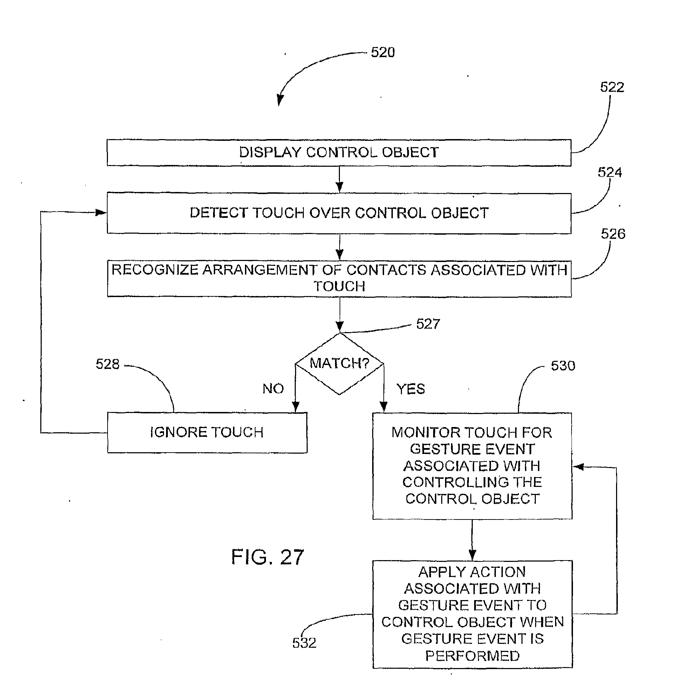

Fig. 27 shows illustrative control operation 520, in accordance with one embodiment of the present invention. The control operation may begin at block 522 where a control object is displayed. The control object may for example be an onscreen button, dial, slider, switch, etc. In block 524, a touch can be detected over the control object. Thereafter, in block 526, the arrangement of contacts associated with the touch can be recognized. In block 527, a determination can be made as to whether or not the arrangement of contacts matches the arrangement of contacts associated with controlling the control object. If it does not match, the operation can proceed to block 528 where the touch is ignored. If it does match, the operation can proceed to block 530 where the touch is monitored for a gesture event associated with controlling the control object. If a gesture event is performed, the action associated therewith can be applied to the control object so that the control object can generate its commands (block 432).

In one embodiment of Fig. 27, the arrangement of contacts that initiates the controlling of the control object may be based on multiple contacts while the arrangement of contacts that is ignored may be based on single contact.

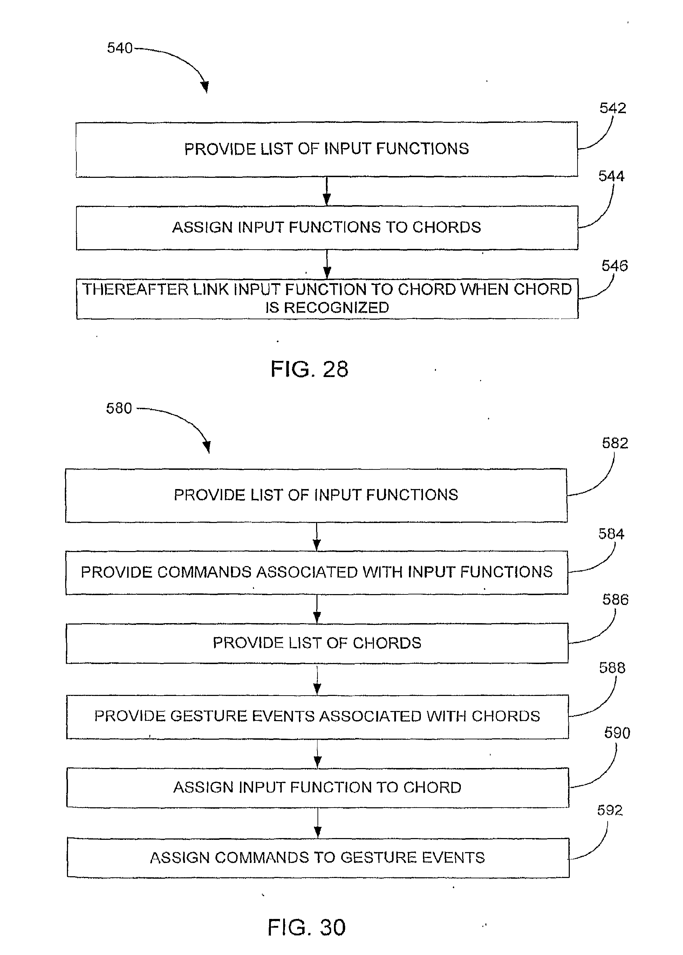

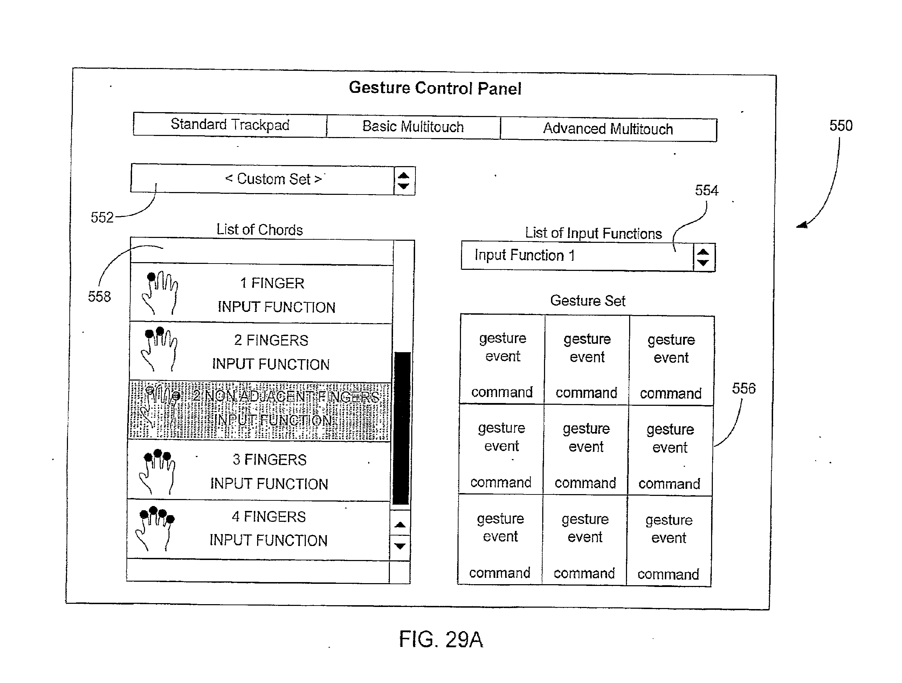

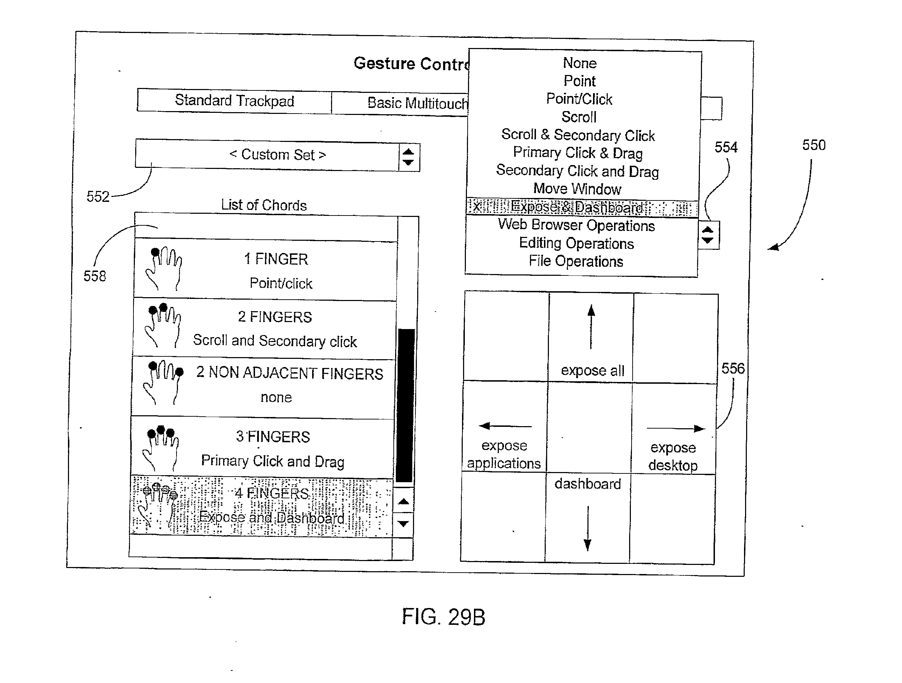

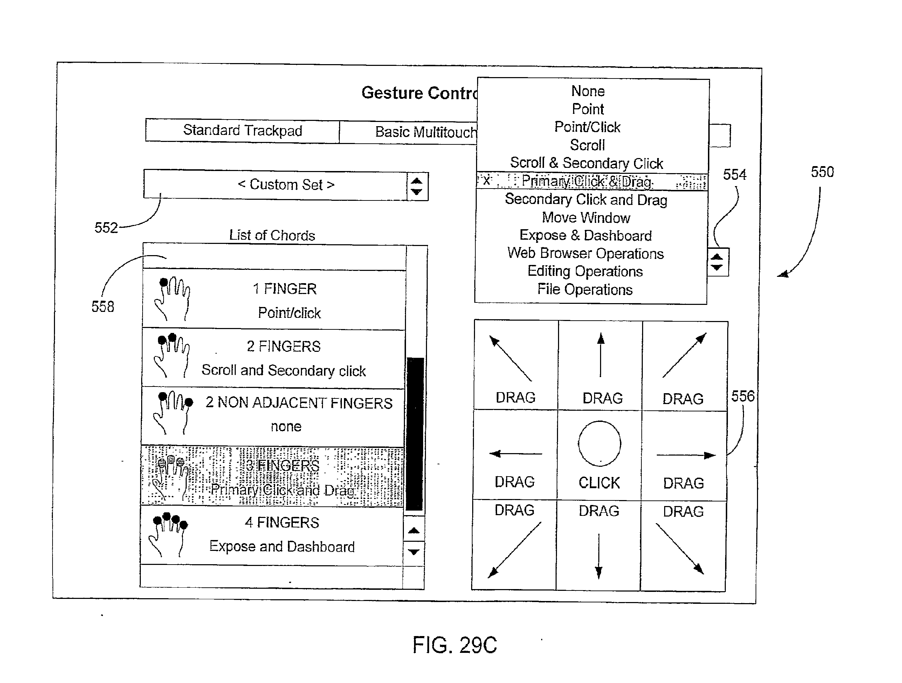

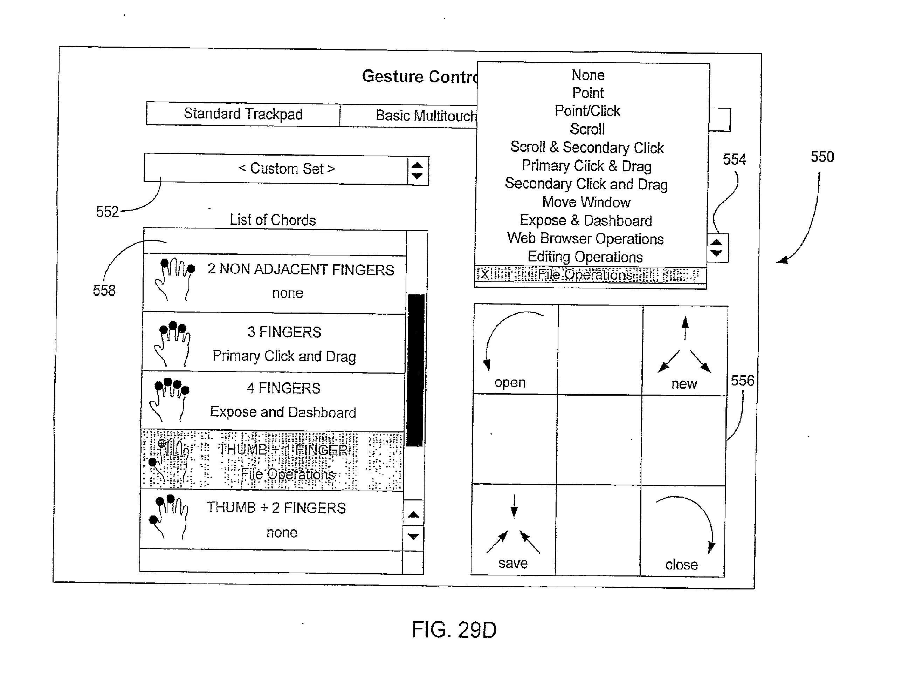

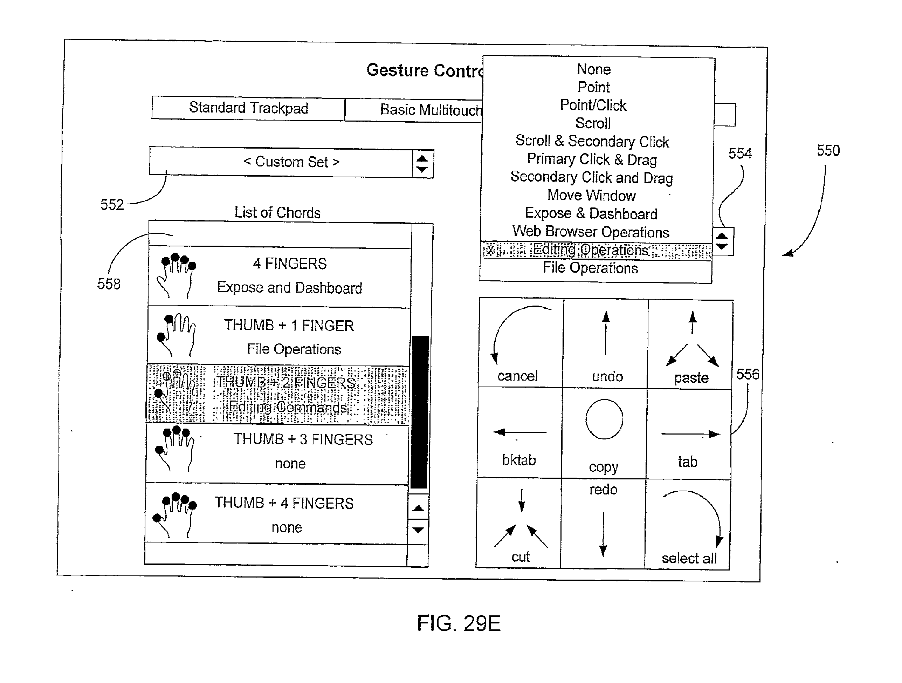

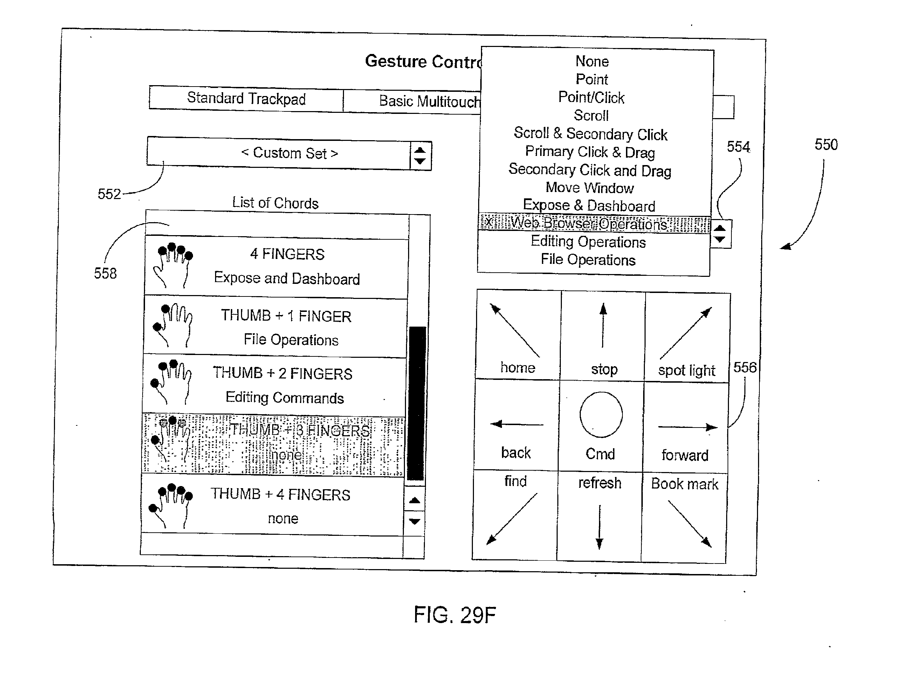

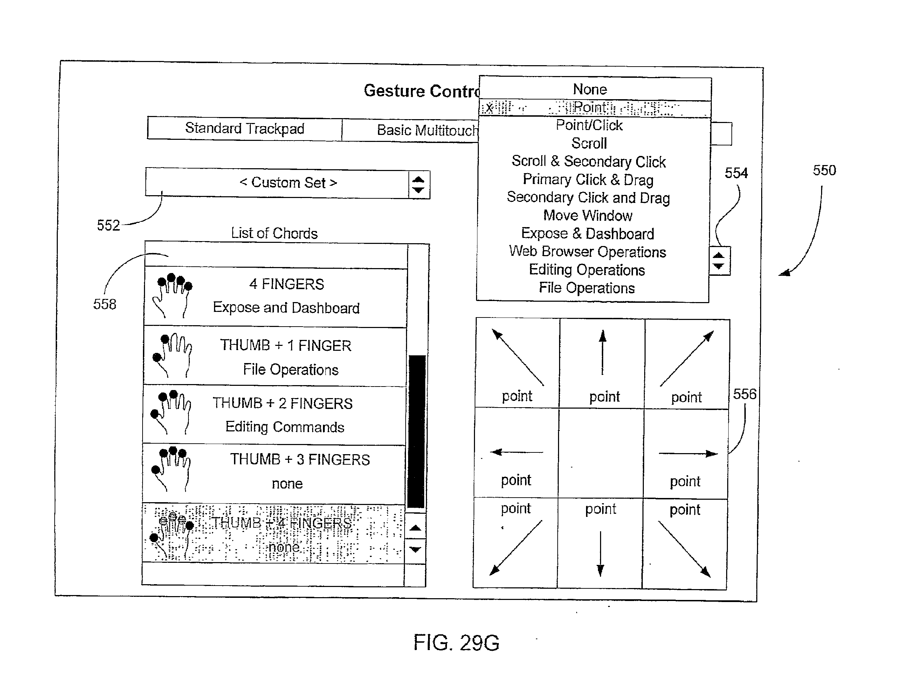

Fig. 28 shows illustrative control operation 540, in accordance with one embodiment of the present invention. The control operation 540 can be performed using a control panel such as the one shown in Fig. 29. The operation may begin at block 542 where a list of input functions are provided. The input functions may have commands and gesture events that are linked to the commands. The commands may be related to the input function. For example, if the input function is editing, then the commands may be cancel, undo, paste, backtab, copy, tab, cut, redo and select all. The gesture events can be actions that can be performed by a chord. The gesture events may include rotations (clockwise and counter clockwise), translations as a group (up, down, right, left), translations relative to one another (spread, closed), taps, etc. The gesture events can be linked to commands in an intuitive manner. For example, the cut command may be initiated by closing the fingers together similar to a cutting action. Further, complimentary commands (cut/paste) are typically linked to complimentary gesture events (spread/closed). In block 544, the input function can be assigned to a particular chord. A chord may be an arrangement of fingers. The chords may be displayed in a list such that the user highlights a particular chord and then selects a particular input function. Chords may be assigned to multiple input functions.

In block 544, the user can assign input functions to a particular chord by selecting an input function from a menu of input functions and then selecting a chord from a menu list of chords. (e.g., highlight input function, and then select chord). Once the chord is selected, the input function can be tied to that chord for future operations (block 546). In some cases, the chord menu may include indication of the input function assigned thereto. In this particular embodiment, the commands may be already assigned to gesture events.

Figs. 29A-G are diagrams of control panel 550, in accordance with one embodiment of the present invention. Fig. 29A shows a basic control panel while Fig. 29B-29G show several examples of one control panel embodiment.

As shown in Fig. 29A, control panel 550 can include a gesture map control 552 in the form a pull down window. When a user selects the pull down window, the user can be presented with one or more gesture mapping options. The user may be presented with a default setting (usually set by the manufacturer) or alternatively the user can select a custom setting so that they can form their own gesture map. There may be more than one custom map. For example, different users may create different maps. When a user opens the control panel, they can select the desired custom map by selecting the gesture map control and then moving through the list of custom maps via a highlight bar. Once a desired map is found, the user can simply highlights it and then perform a primary click in order to set up the desired gesture map. Thereafter, the user can change their settings.

Control panel 550 also can include a menu of input functions 554 also in the form of a pull down window. When a user selects the pull down window, the user can be presented with a list of one or more input functions. The input functions may include for example, none, point, point/click, scroll, scroll and secondary click, primary click and drag, secondary click and drag, move window, expose & dashboard, web browser operations, editing operations, file operations and the like. In order to highlight one of the input function, the user can be provided with a highlight bar that traverses through the list in accordance with user controls.

Control panel 550 can also include a gesture set section 556 that shows commands associated with the input function that is highlighted, and gesture events assigned to the commands. The gesture set section may only be for feedback, but can also include the functionality of assigning commands to gesture events (or vice versa). Although the window can be widely varied, in the illustrated embodiment, the window may contain separated boxes, each of which contains a gesture event and a command associated therewith. In this embodiment, the boxes can be set up in a 3 x 3 matrix, and therefore there can be 9 different gesture events and 9 different commands for each input function. In most cases, oppositely performed gesture events may be placed across from one another. For example, rotate CCW can be located opposite of rotate CW, spread can be located opposite contract, left swipe can be located opposite right swipe, up swipe can be located opposite down swipe. If possible, complimentary command scan be linked to opposite gesture events thereby making them more intuitive.

Control panel 550 can also include a menu of chords 558. The chords can be laid out one on top of the other and move through a window via a scroll bar. The chords may include text identifiers as well as chord indicators showing examples of how to make the chord. In the illustrated embodiment, the chord indicator may be in the form of a hand with darkened circles covering the fingers used to make the chord. The chords may also include text identifiers for the input function assigned to the chord.

In one embodiment, in order to set up the gesture map, the user can highlight an input function and then move to the chord menu. Once at the chord menu, the user can select a desired chord for that input function by traversing through the list of chords, highlighting the desired chord and then performing a selection event as for example via a click. Thereafter, the input function can be assigned to the chord. In some cases, once the user assigns the input function to the chord, the input function identifier can be placed in the chord menu along with the chord. Furthermore, the input function may include an identifier indicating that is has been assigned. For example, a check may be placed by the assigned input function. During operations, when a user places the finger arrangement shown in the chord menu on the multipoint touch surface, the finger arrangement can be recognized as the chord and thereafter, the gesture set associated with the input function assigned to chord can be set as the primary or active gesture set.

Fig. 29B shows an example where the input function menu may be opened and the user may be assigning the expose dashboard input function to the 4 finger chord. Furthermore, the gesture set may show the commands associated with the expose/dashboard input function and the gesture events used to initiate the commands. For example, a swipe upwards can initiate expose all, a right swipe can initiate expose desktop, a left swipe can initiate expose applications, and a downward swipe can initiate dashboard.

Fig. 29C shows an example where the input function menu may be opened and the user may be assigning the primary click and drag input function to the 3 finger chord. Furthermore, the gesture set may show the commands associated with the click and drag input function and the gesture events used to initiate the commands. For example, directions movements in any direction can be used to drag an object and a tap can be used to initiate a click.

Fig. 29D shows an example where the input function menu may be opened and the user may be assigning the file operation input function to the Thumb + 1 finger chord. Furthermore, the gesture set may show the commands associated with the file operation input function and the gesture events used to initiate the commands. For example, a rotational swipe CCW can be used to initiate open, a rotational swipe CW can be used to initiate close, spread can be used for new and contract can be used for save.

Fig. 29E shows an example where the input function menu may be opened and the user may be assigning the editing operations input function to the Thumb + 2 finger chord. Furthermore, the gesture set may show the commands associated with the editing operation input function and the gesture events used to initiate the commands. For example, a swipe upwards can initiate undo, a right swipe can initiate tab, a left swipe can initiate bktab applications, and a downward swipe can initiate redo. Furthermore, a rotational swipe CCW can initiate cancel, a rotational swipe CW can initiate select all, spread can initiate paste and contract can initiate cut. Moreover, a tap can initiate copy.

Fig. 29F shows an example where the input function menu may be opened and the user may be assigning the web browser operations input function to the thumb + 3 finger chord. Furthermore, the gesture set may show the commands associated with the web browser operations input function and the gesture events used to initiate the commands. For example, a swipe upwards can initiate stop, a right swipe can initiate forward, a left swipe can initiate back, and a downward swipe can initiate refresh. Furthermore, a left upwards swipe can initiate home, a right upward swipe can initiate spot light, a left downwards swipe can initiate find, and a right downward swipe can initiate book mark.

Fig. 29G shows an example where the input function menu may be opened and the user may be assigning the point input function to the thumb + 4 finger chord. Furthermore, the gesture set may show the commands associated with the point input function and the gesture events used to initiate the commands. For example, directions movements in any direction can be used for pointing.

Fig. 30 shows illustrative control operation 580, in accordance with one embodiment of the present invention. The control operation 580 can be performed using a control panel such as the one shown in Fig. 29. The operation may begin at block 582 where a list of input functions can be provided. In block 584, a list of commands associated with the input functions can be provided. In block 586, a list of chords can be provided. In block 588, a list of gesture events associated with the chords can be provided. In block 590, the input function can be assigned to a chord (or vice versa). In block 592, the commands can be assigned to gesture events. In an alternative operation, the operation 580 may include providing a list of all available commands rather than having a list associated with a particular input function. The user can assign any command to the input function. Also in an alternative operation, the operation may include providing a list of all available gesture events rather than having a list associated with a particular chord. The user can assign any gesture event to the chord.

Referring to Fig. 29, the user may assign input functions to a particular chord by selecting an input function from a menu of input functions, and then selecting a chord from a menu list of chords. (e.g., highlight input function, and then select chord). Once the chord is selected, the input function can be tied to that chord for future operations. In some cases, the chord menu may include indication of the input function assigned thereto. Furthermore, the user may assign commands to gesture events by moving the commands over a gesture. For example, the user can select and drag a particular command and drops it over the desired gesture event. Thereafter, the command can be tied to that gesture event for future operations.

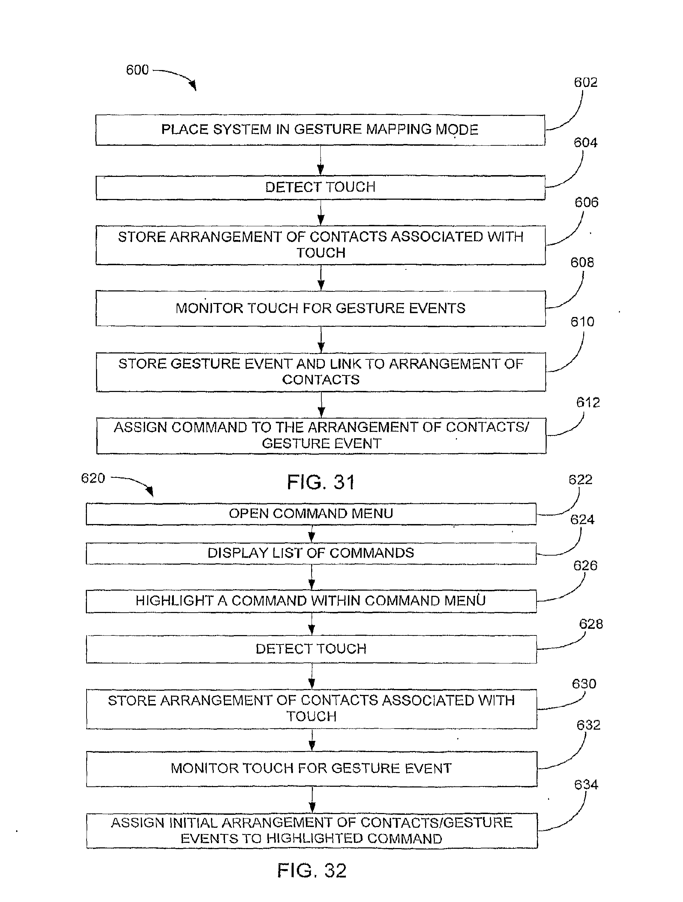

Fig. 31 shows illustrative gesture mapping method 600, in accordance with one embodiment of the present invention. The mapping 600 may begin at block 602 where the system is placed in a gesture mapping mode. Once in the gesture mapping mode, a touch can be detected in block 604. Thereafter, in block 606, the arrangement of contacts associated with the touch can be stored. For example, an image of the arrangement of contacts can be generated. Thereafter, in block 608, the touch can be monitored for a gesture event. Thereafter, in block 610, the gesture event can be stored. Thereafter, in block 612, a command can be assigned to the arrangement of contacts/gesture event. Once out of the gesture mapping mode, the command can be initiated by placing the arrangement of contacts down so that it can be recognized and then performing the gesture event.

Fig. 32 shows illustrative gesture mapping method 620, in accordance with one embodiment of the present invention. The gesture mapping method 620 may begin at block 622 where a command menu can be opened. The command menu may be any of those menus found in the heading of an application (e.g., File, Edit, View, Insert, Format, Tools, etc.). When the command menu is opened, a list of commands can be displayed (block 624). Following block 624, a highlight bar can be moved over a command in the list of commands via user control. Thereafter, in block 626, a touch can be detected on a touch surface while a command is highlighted. Thereafter, in block 628, the arrangement of contacts associated with the touch can be imaged and stored. Thereafter, in block 630, the touch can be monitored for a gesture event. Thereafter, in block 632, a gesture event can be imaged and stored when it is performed. Thereafter, in block 634, initial arrangement of contacts and gesture events can be assigned to the highlighted command. Once out of the gesture mapping mode, the command can be initiated by placing the arrangement of contacts down so that it can be recognized and then performing the gesture event.

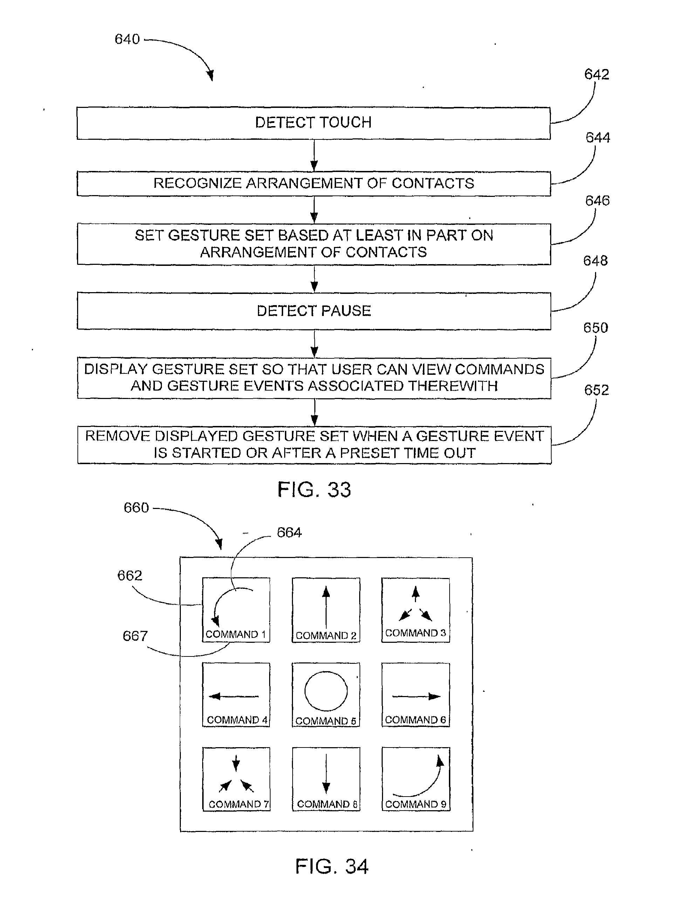

Fig. 33 shows illustrative gesture feedback method 640, in accordance with one embodiment of the present invention. The method 640 may begin at block 642 where a touch is detected. Thereafter, in block 644, the arrangement of contacts can be recognized. Thereafter, in block 646, the gesture set can be loaded based on at least in part the arrangement of contacts. Thereafter, in block 648, a pause can be detected during the touch (e.g., no gesture event is performed for a period of time). Thereafter, in block 650, the gesture set can be displayed so that the user can view commands and gesture events tied thereto (see for example Fig. 34). Thereafter, in block 652, the gesture set can be removed from display when a gesture event is started or after a preset time out.

Fig. 34 shows illustrative gesture viewing window 660, in accordance with one embodiment of the present invention. A gesture viewing window can be a gesture menu that pops up containing information on how to perform a gesture event and what command will be initiated if the gesture event is performed. The user therefore can quickly imprint the gesture set into memory before performing a gesture event. The gesture window 660 may be a semi-transparent or opaque window that is displayed in the proximity of the first touch down point (or pause) and over any other displayed information. Although the window can be widely varied, in the illustrated embodiment, the window 660 may contain separated boxes 662, each of which can contain a gesture event 664 and a command 667 associated therewith. In this embodiment, the boxes may be set up in a 3 x 3 matrix, and therefore there may be 9 different gesture events and 9 different commands. In most cases, oppositely performed gesture events can be placed across from one another. For example, rotate CCW can be located opposite of rotate CW, spread can be located opposite contract, left swipe can be located opposite right swipe, up swipe can be located opposite down swipe. If possible, complimentary commands can be linked to opposite gesture events thereby making them more intuitive. For example, in the case of cut and paste, cut may be associated with contract while paste may be associated with spread. Furthermore, another may be associated with a tap (shown by a circle).

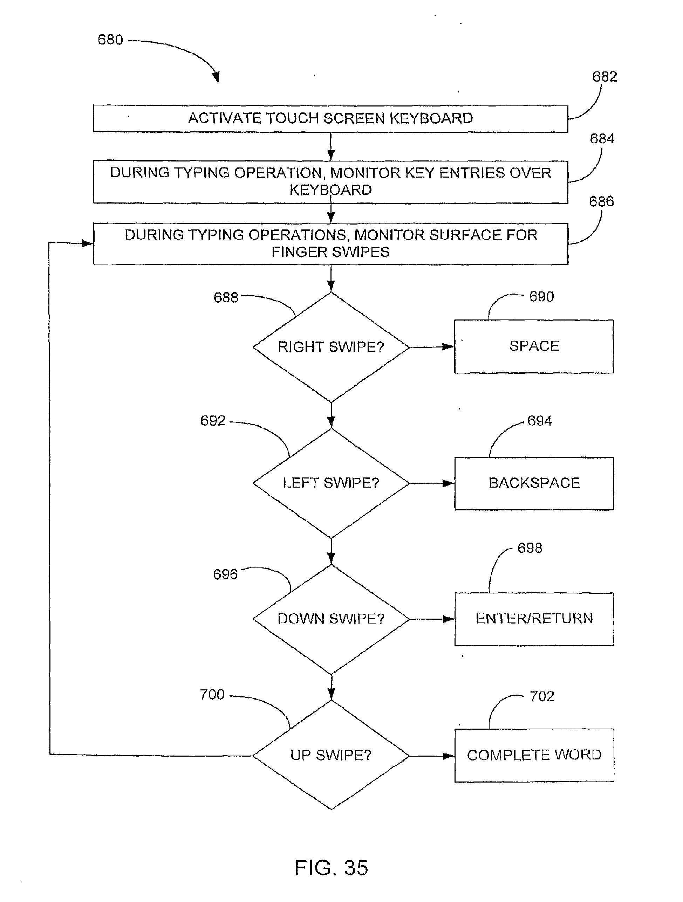

Fig. 35 shows illustrative keyboard method 680 implemented via a touch screen, in accordance with one embodiment of the present invention. The method 680 may begin at block 682 where a touch screen keyboard is activated (e.g., displayed and ready for receiving input). Thereafter, in block 684, the touch surface can be monitored for key entries (e.g., a finger tapping on a displayed key). Simultaneously, in block 686, the touch surface can be monitored for swiping gesture events. If the swiping gesture event is a right swipe, a space command can be performed (blocks 688 and 690). If the swiping gesture event is a left swipe, a backspace/delete command can be performed (blocks 692 and 694). If the swiping gesture event is a down swipe, an enter/return command can be performed (blocks 696 and 698). If the swiping gesture event is an up swipe, a page break command can be performed (blocks 700 and 702). It should be noted, however, that the methods is not limited to these commands and that other commands can be performed.

With so many combinations of chords, gesture events, commands to evaluate, it may be helpful to isolate strength and weaknesses and develop a guiding theory of which chords and gesture events fit well with which commands. It is generally believed that long term user experience is maximized by matching the best finger combinations with the most frequent commands. Mediocre finger combinations should only be used for less frequent commands. However, because of subtle issues such as cross talk, following this principal alone is not sufficient to create a great user experience.

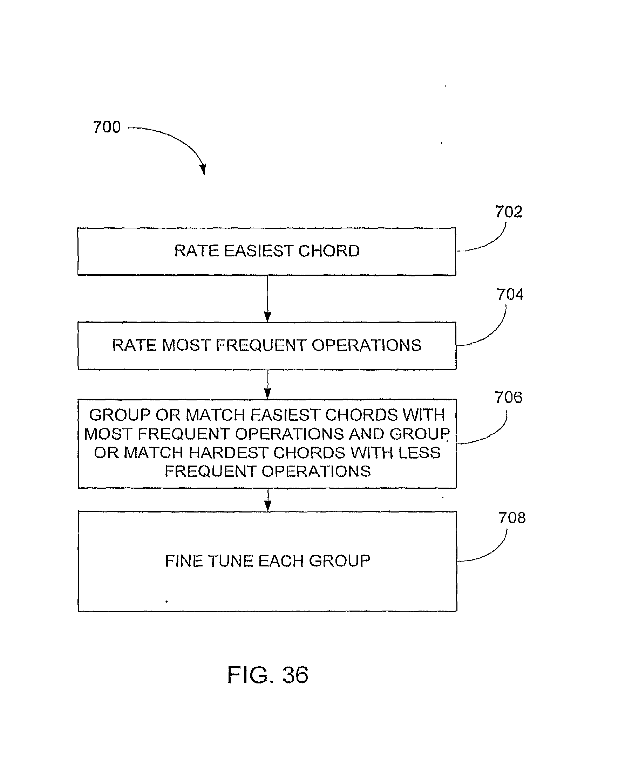

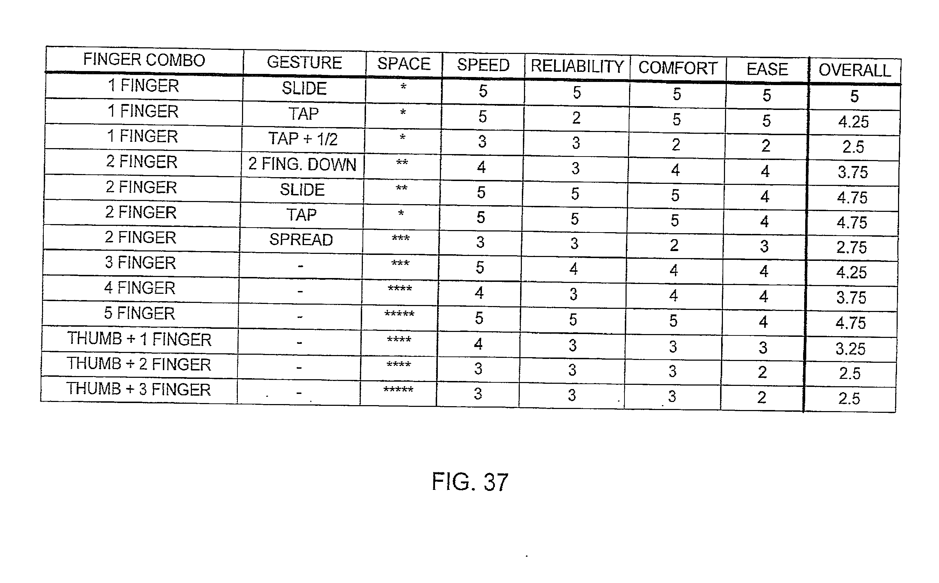

Fig. 36 shows illustrative gesture design process 720, in accordance with one embodiment of the present invention. The design process 720 includes block 702 where the easiest chords may be rated or ranked. The chords may for example be rated based on speed, reliability, comfort and ease of use, simplicity, etc. This may also be based on the size of the touch surface as smaller surfaces cannot accommodate all finger combinations. Fig. 37 shows one example of a matrix for rating chords. It should be appreciated that this matrix is by way of example and not by way of limitation.

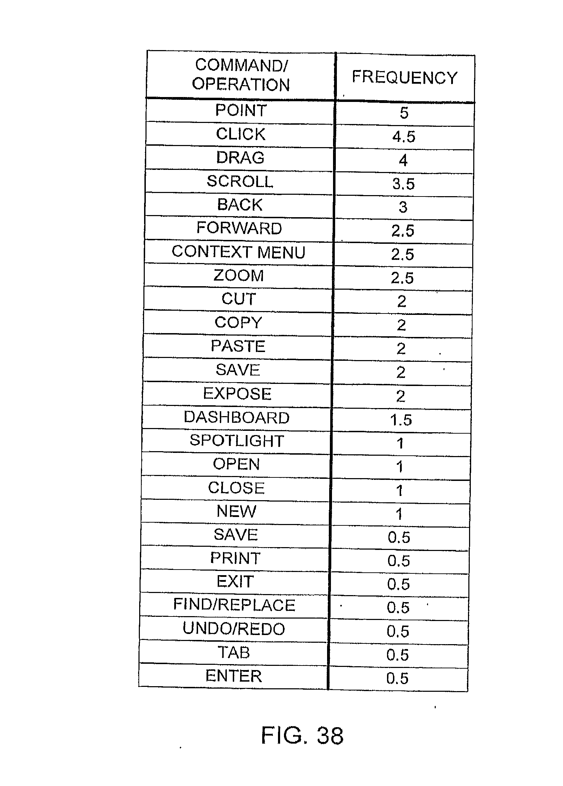

The design process also includes block 704 where the frequency of operations may be rated or ranked. For example, how often a particular user or a group of users performs a particular set of operations. Frequency rankings cany vary according to the proportions of operations relative to each other (e.g., web browsing vs. editing). Fig. 38 shows one example of a matrix for ranking frequency of operations for a few operations. It should be appreciated that this list is by way of example and not by way of limitation as there are many more operations.

The design process can also include block 706 where the easiest chords are substantially grouped or matched with the most frequent operations and the hardest chords are substantially grouped or matched with the least frequent operations.

The design process can also includes fine tuning the groups. The fine tuning can be based on many factors including complimentary commands, intuitiveness, cross talk, sensible organization, etc. As should be appreciated, the design process may not be as simple as matching the easiest chord with the most frequent operation. In some cases, the easiest chord may not make sense for the most frequent operation. As such, the chords and the operations may be shifted while still trying to maintain easy with most frequent and hard with less frequent.

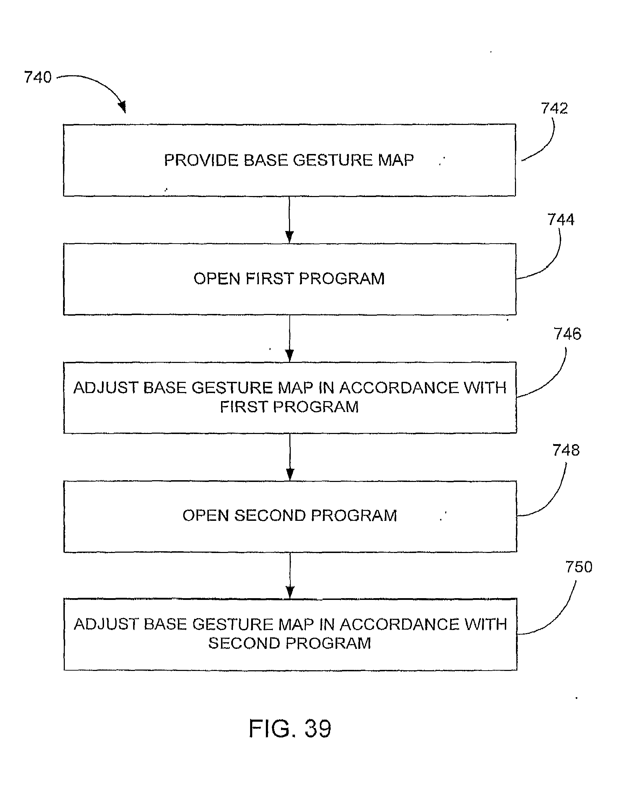

Fig. 39 shows illustrative control operation 740, in accordance with one embodiment of the present invention. The control operation may start at block 742 where a base gesture map is provided. The base gesture map can include gesture preference settings including for example chords, commands gesture events, etc. Following block 742, the operation can proceed to block 744 where a first program is made active. The program may for example be a word processing program, media management program, spreadsheet program, media editing program, drawing program, etc. In block 746, the base gesture map can be adjusted in accordance with the first program while the first program is active. For example, the program may instruct the base gesture map to change the meanings of chords and gesture sets for this particular program. In block 748, a second program can be made active. In block 750, the base gesture map can be adjusted in accordance with the second program while the second program is active.

In one example of Fig. 39, a media editing program may adjust the gesture map as follows: one finger for pointing; two fingers for moving, scaling, rotating objects; three fingers for primary drag; four fingers for scroll pan; 5 fingers for pointing while a word processing program may adjust the gesture map as follows: 2 fingers for pointing text cursor, 3 fingers for selecting text, 4 fingers for paging, begin line and endline.

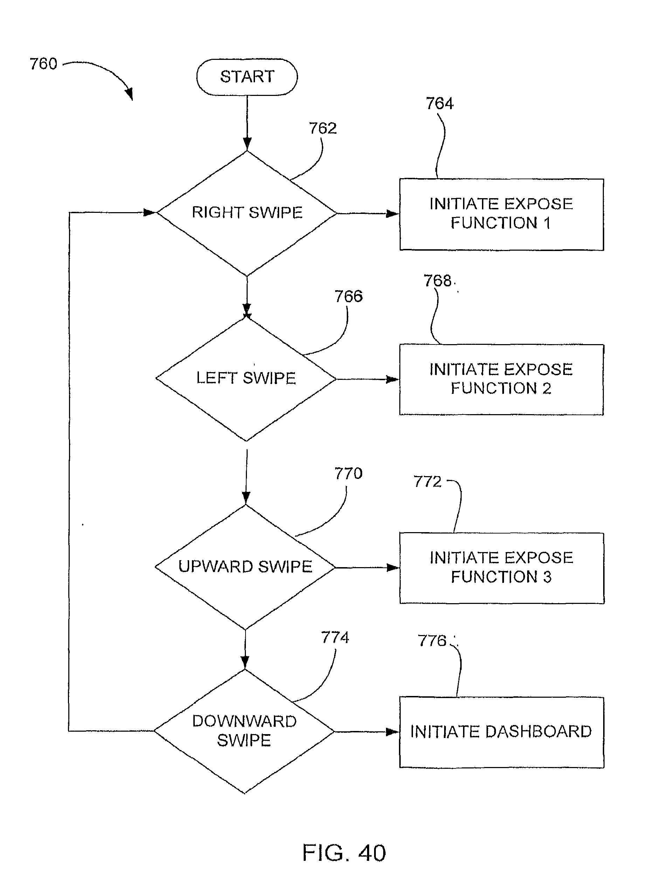

Fig. 40 shows illustrative control operation 760, in accordance with one embodiment of the present invention. The control operation can be associated with a gesture set such as one that is implemented with a three finger chord. The control operation may start at block 762 where a determination is made as to whether or not a right swipe is detected. If so, the operation can proceed to block 764 where a first expose function is initiated. If not, the operation can proceed to block 766 where a determination is made as to whether or not a left swipe is detected. If so, the operation can proceed to block 768 where a second expose function is initiated. If not, the operation can proceed to block 770 where a determination is made as to whether or not an upward swipe is detected. If so, the operation can proceed to block 772 where a third expose function is initiated. If not, the operation can proceed to block 774 where a determination is made as to whether or not a downward swipe is detected. If so, the operation can proceed to block 776 where a dashboard function is initiated. If not, the operation can proceed back to 762.

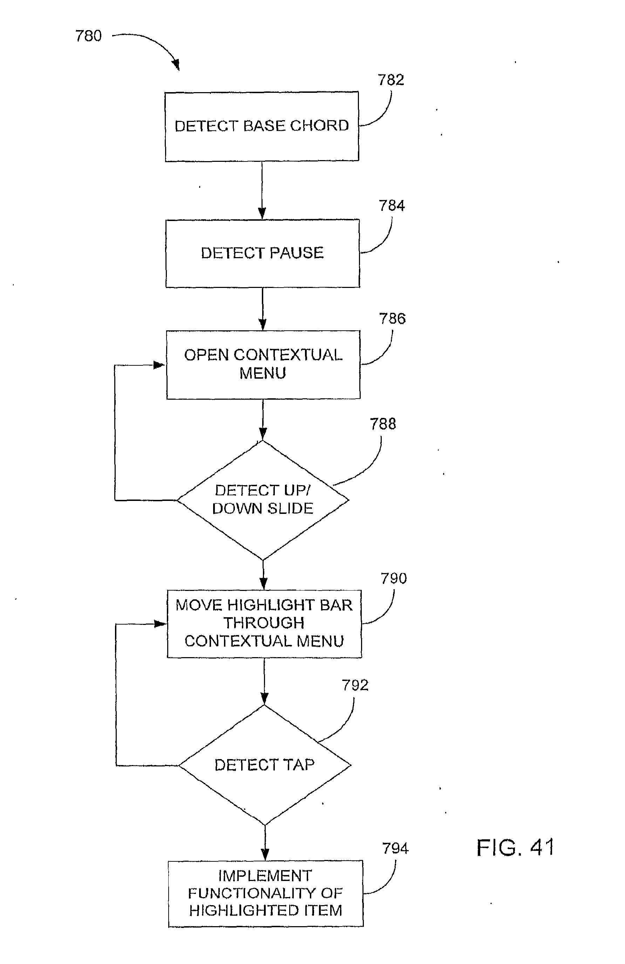

Fig. 41 shows illustrative control operation 780, in accordance with one embodiment of the present invention. The control operation may start at block 782 where a base chord is detected. The base chord may for example be three finger chord. During the touch stroke, a pause is detected (block 784). Thereafter, in block 786, a contextual menu can be opened due to the pause of the base chord. Thereafter, in block 788, a determination can be made as to whether or not an up or down slide is detected. If so, the operation can proceed to block 790 where a highlight bar is moved though the contextual menu in accordance with the sliding motion. Thereafter, in block 792, a determination can be made as to whether or not a tap is detected. If so, the operation can proceed to block 794 where the functionality of the highlighted item is implemented.

Dashboard is home to widgets: mini-applications that let you perform common tasks and provide you with fast access to information. With a swipe, Dashboard can appear, complete with widgets that bring a user a world of information - real-time weather, stock tickers, flight information and more - instantly. Dashboard can disappear just as easily, so that a user can get back to what they were doing. Dashboard is manufactured by Apple Computer of Cupertino, CA.

Expose allows users to instantly access any open window with a single swipe - and stunning style that can never be imitated. Display all open windows as thumbnails, view windows of the current application or hide all windows to quickly locate a file on your desktop. Expose is manufactured by Apple Computer of Cupertino, CA.

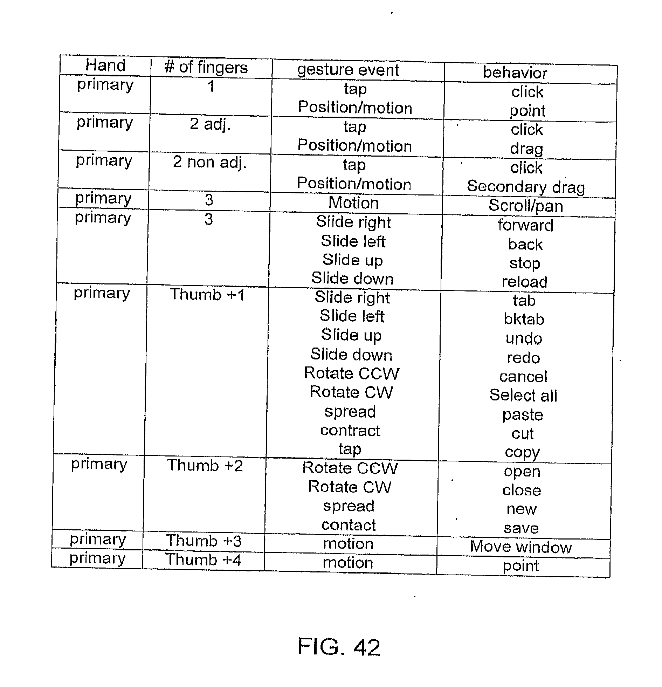

Figs. 42-44 show various gesture maps, in accordance with multiple embodiments of the present invention. Each Figure includes four headings: 1) hand, 2) # of fingers (chord), 3) gesture event, and 4) behavior or action associated with gesture event.

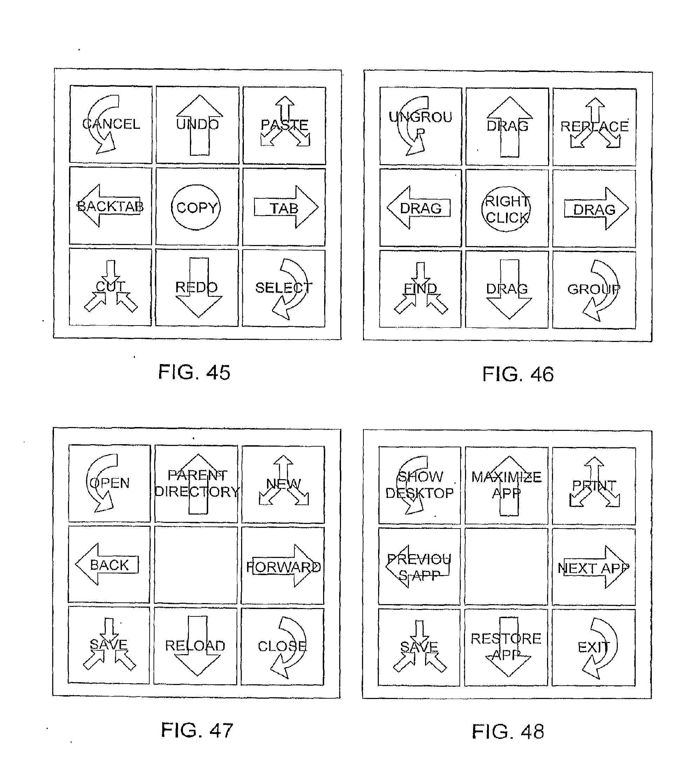

Figs. 45-48 show various gesture sets, in accordance with several embodiments of the present invention. In all of these Figures, the gesture sets include various motions shown by arrows (swipes, rotations, spread/contract), and one or more taps shown by circles. They also can include commands which are tied to the motions that they lie over. The gesture sets can be applied to different chords depending on the users needs. In one example, the gesture set of Fig. 45 may be applied to a Thumb + 1 finger chord, the gesture set of Fig. 46 may be applied to a thumb +2 finger chord, the gesture set of Fig. 47 may be applied to a thumb + 3 finger chord, and the gesture set of Fig. 48 may be applied to a spread thumb and 3 finger chord. It should be understood that the gesture sets as well as the chords are made by way of example and not by way of limitation. For example, in case of the gesture sets, different commands may be used, different gesture events may be used, different assignments may be used, etc.

Additional embodiments that are related Figs. 8-11 will now be described.

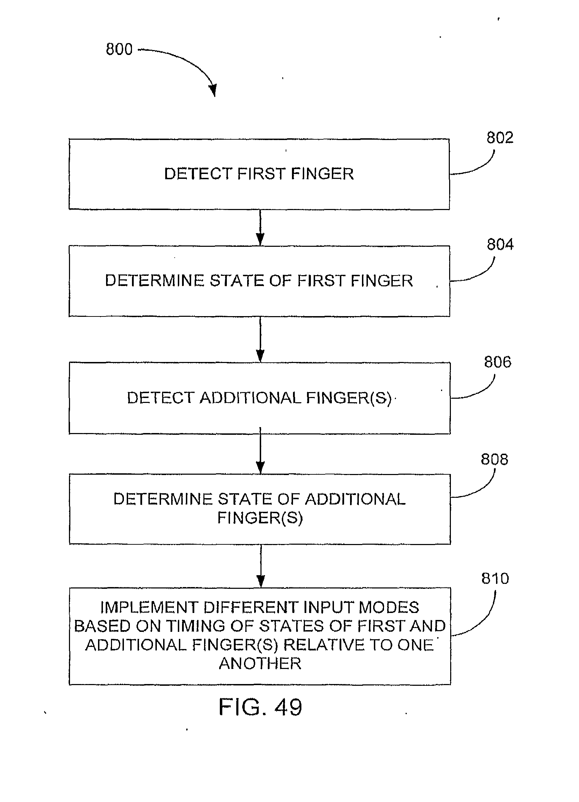

Fig. 49 shows illustrative gesture operation 800, in accordance with one embodiment of the present invention. The operation 800 may begin at block 802 where only a first finger is detected. Thereafter, in block 804, the state of the first finger can be determined. The state may for example correspond to a particular orientation of the finger, the position of the finger relative to the touch surface, whether the finger is moving or stationary, the direction of finger motions and the like. Thereafter, in block 806, one or more additional fingers can be detected. For example, besides the first finger, a different second finger may be detected. In block 808, the state of the one or more additional fingers can be determined. Thereafter, in block 810, different input modes can be implemented based on timing of states of fist and additional fingers relative to one another. The different input modes can be widely varied, and may be selected form any of those discussed herein or any suitable or known input mode. One example of an input mode may be a pointing mode or dragging mode. Other modes may for example include scrolling, panning and the like.

In one example, the state of the first finger can include stationary or moving, and the state of a second finger can include whether the second finger is present or not. In this example, pointing operations can be implemented if only the first finger is detected. Furthermore, pointing operations can be switched to dragging operations if the second finger is detected when the first finger is stationary, and pointing operations are maintained if the second finger is detected when the first finger is moving. In so doing, a user can easily switch back and forth between pointing and dragging operations. For example, the user may move one finger over the touch surface to position it or a cursor over a file folder (e.g., pointing), stop the finger or cursor over the file folder, place a second finger down on the touch surface thus indicating that the file folder is desired to be dragged, and then move their first finger to another location to drag the file folder to a new location. The user can keep moving their finger and thus the file folder around, or simply pick up the first finger to finally locate the file fold within the screen.

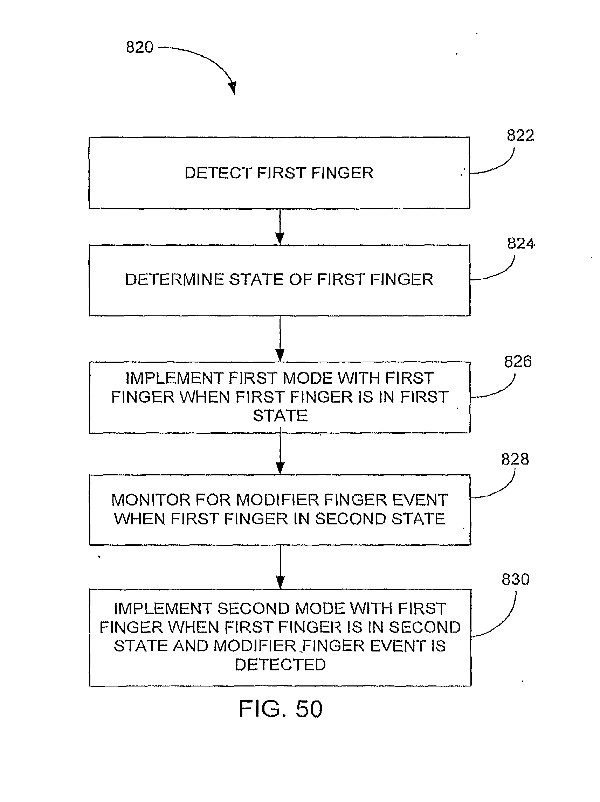

Fig. 50 shows illustrative gesture operation 820, in accordance with one embodiment of the present invention. The operation 820 may begin at block 822 where only a first finger is detected. Thereafter, in block 824, the state of the first finger can determined. The state may for example correspond to a particular orientation of the finger, the position of the finger relative to the touch surface, whether the finger is moving or stationary, the direction of finger motions and the like. Thereafter, in block 826, a first input mode can be implemented with the first finger when the first finger is in a first state. In block 828, a modifier finger event can be monitored for. The modifier finger event may be provided by a finger other than the first finger. It may for example be a second finger. The event may be the presence of the second finger or it may be some type of gesturing event, or a specific chord. Thereafter, in block 830, a second can be implemented when the first finger is in second state and the modifier finger event is detected. The modifier event may for example be the presence of a second finger next to the first finger. In one example, the first mode is a pointing mode and the second mode is a dragging mode. Of course, the embodiment can be applied to other modes as needed.

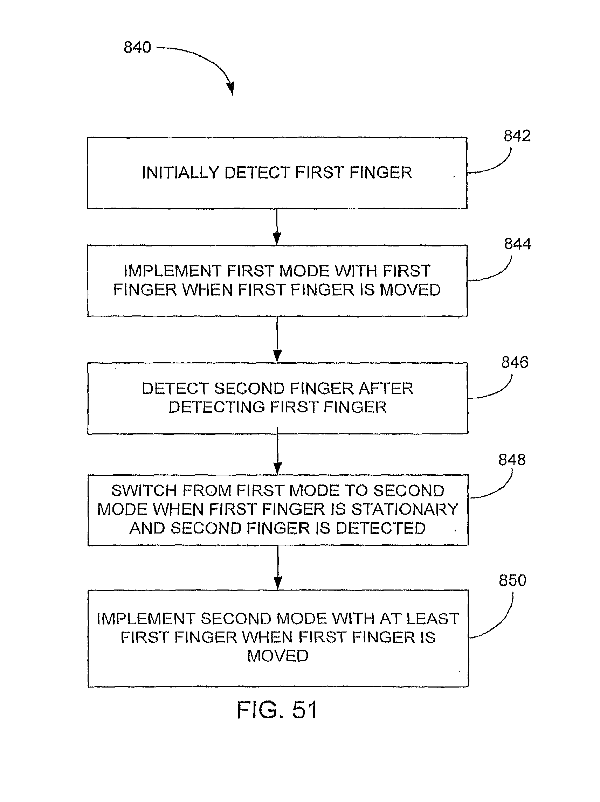

Fig. 51 shows illustrative gesture operation 840, in accordance with one embodiment of the present invention. The operation 840 may begin at block 842 where a first finger is initially detected. Thereafter, in block 844, a first mode associated with the first finger can be implemented when the first finger is moved. Thereafter, in block 826, a second finger can be detected after the first finger is detected. In block 828, the first mode can be switched to a second mode when the first finger is stationary and the presence of a second finger is detected. The presence of the second finger may be location specific as for example to a specific location of the touch surface or a specific location relative to the first finger. In one example, the second finger should be detected proximate to the first finger. Thereafter, in block 830, the second mode can be implemented with at least the first finger when the first finger is moved. In one example, the first mode can be a pointing mode and the second mode can be a dragging mode. Of course, the embodiment can be applied to other modes as needed.

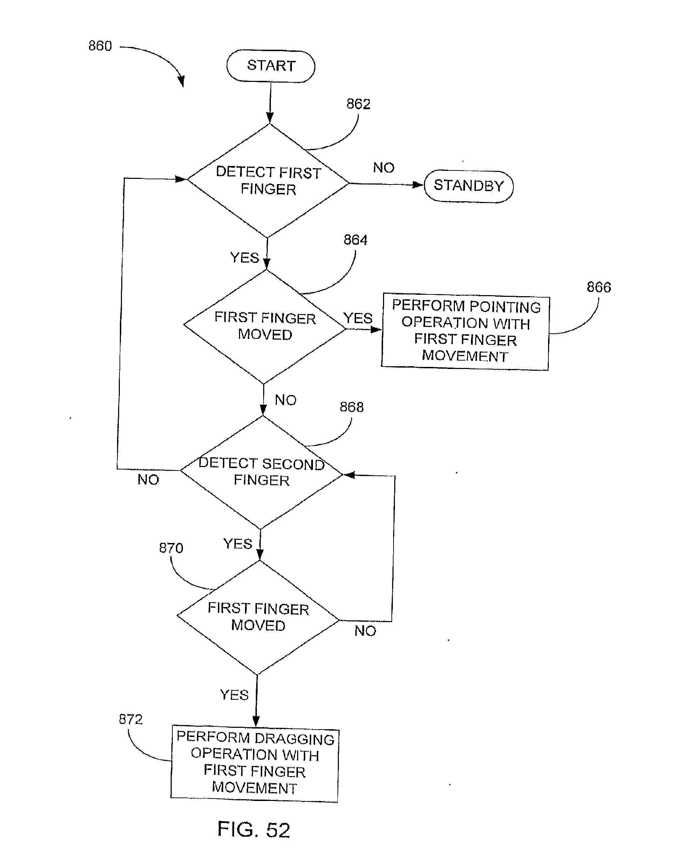

Fig. 52 shows illustrative gesture operation 860, in accordance with one embodiment of the present invention. The operation 860 may begin at block 862 where a determination is made as to whether a single finger is detected. The single finger may be identified or not depending on the needs of the system. For example, in some cases, the operations may only be implemented if a specified finger is identified while in other cases, the method may be implemented if any single finger is detected If a single finger is detected, the operation can proceeds to block 864 where a determination is made as to whether or not the finger is moved. If the finger is moved, in block 866, pointing operations can be performed with first finger movement. If the first finger is no longer detected, the pointing operations may end. If the finger is not moved, in block 868, a determination can be made as to whether or not a second finger is detected while the first finger is stationary. If not, the operation can proceed back to block 862. If so, the operation can proceed to block 870 where a determination is made as to whether or not the first finger is moved after detecting the second finger. The second finger may or may not be required to move with the first finger.. In most cases, the second finger can be picked up so that it is no longer detected. If the first finger is not moved, the operation can proceed back to block 868. If the first finger is moved, the operation can proceed to block 872 where dragging operations are performed in accordance with the first finger movement. If the first finger is no longer detected, the dragging operations can end.

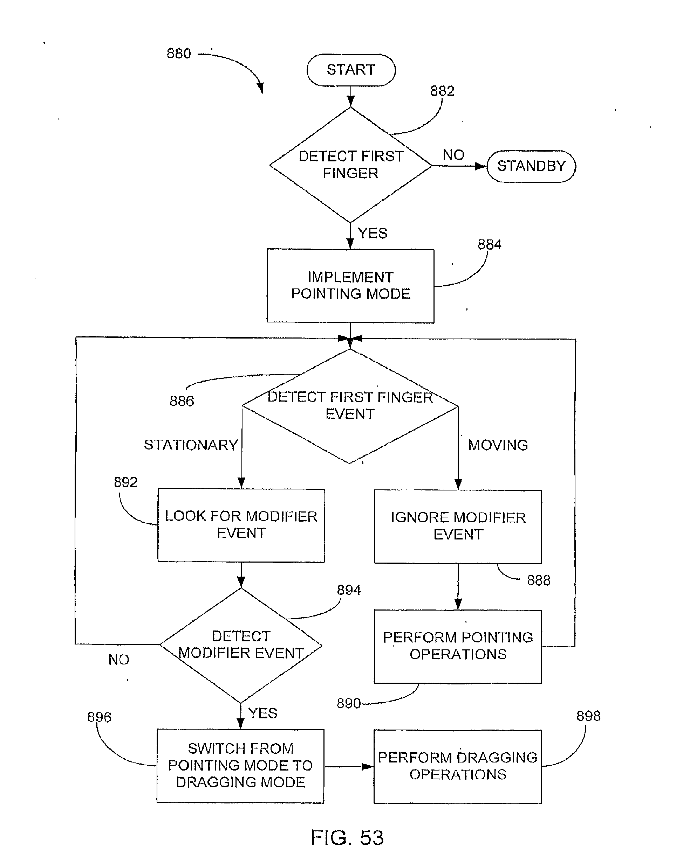

Fig. 53 shows illustrative gesture operation 880, in accordance with one embodiment of the present invention. The operation 880 may begin at block 882 where a determination is made as to whether a first finger is detected. The first finger may be identified or not depending on the needs of the system. For example in some cases, the operation may only be implemented if a specified finger is identified while in other cases, the operation may be implemented if any single finger is detected. If a finger is detected, the operation can proceed to block 884 where a pointing mode is implemented. Thereafter, in block 886, a determination can be made as to whether or not the finger is moved. If the finger is moved, in block 888, subsequent modifier events may be ignored. For example, additional detected fingers can be ignored and only the movement of the first finger may be relevant. Thereafter, in block 890, pointing operations can be performed in accordance with the moving finger. If the first finger is no longer detected, the pointing operations can end. If the first finger is stationary, the operation can proceed to block 892 where a modifier event is looked for. A modifier event may for example be the addition of a finger, or a gesture made by a new finger, etc. Thereafter, in block 894, a determination can be made as to whether or not a specific modifier event is detected. If not, the operation can proceed back to block 886. If so, the operation can proceed to block 896 where the system is switched from pointing mode to a dragging mode. If the first finger is moved, the operation can proceed to block 898 where dragging operations are performed in accordance with the first finger movement. If the first finger is no longer detected, the dragging operations can end.

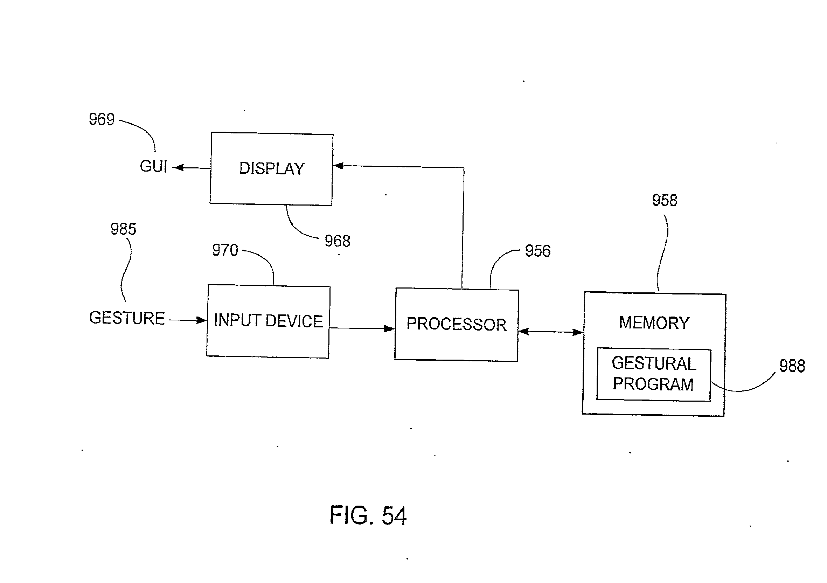

Fig. 54 shows illustrative electronic system 950, in accordance with one embodiment of the present invention. The electronic system may be configured with any of the previous embodiments. The electronic system 950 may correspond to a computer system such as a personal computer system that includes desktops, laptops, tablets or handheld computers. The electronic system may also correspond to other consumer electronic devices such as handheld devices including cell phones, PDAs, dedicated media players, and the like. Of course, the electronic system can be applied to other electronic devices.

The exemplary system 950 shown in Fig. 54 can include a processor 956 configured to execute instructions and to carry out operations associated with the system 950. For example, using instructions retrieved for example from memory, the processor 956 may control the reception and manipulation of input and output data between components of the computing system 950. The processor 956 can be implemented on a single-chip, multiple chips or multiple electrical components. For example, various architectures can be used for the processor 956, including dedicated or embedded processor, single purpose processor, controller, ASIC, and so forth.

In most cases, the processor 956 together with an operating system may operate to execute computer code and produce and use data. Operating systems are generally well known and will not be described in greater detail. By way of example, the operating system may correspond to OS/2, DOS, Unix, Linux, Palm OS, and the like. The operating system can also be a special purpose operating system, such as may be used for limited purpose appliance-type computing devices. The operating system, other computer code and data may reside within a memory block 958 that is operatively coupled to the processor 956. Memory block 958 can provide a place to store computer code and data that are used by the system 950. By way of example, the memory block 958 may include Read-Only Memory (ROM), Random-Access Memory (RAM), hard disk drive and/or the like. The information can also reside on a removable storage medium and loaded or installed onto the system 950 when needed. Removable storage mediums include, for example, CD-ROM, PC-CARD, memory card, floppy disk, magnetic tape, and a network component.

The system 950 can also include a display device 968 that is operatively coupled to the processor 956. The display device 968 may be a liquid crystal display (LCD) (e.g., active matrix, passive matrix and the like). Alternatively, the display device 968 may be a monitor such as a monochrome display, color graphics adapter (CGA) display, enhanced graphics adapter (EGA) display, variable-graphics-array (VGA) display, super VGA display, cathode ray tube (CRT), and the like. The display device may also correspond to a plasma display or a display implemented with electronic inks.

The display device 968 can be configured to display a graphical user interface (GUI) 969 that provides an easy to use interface between a user of the system and the operating system or application running thereon. Generally speaking, the GUI 969 represents, programs, files and operational options with graphical images. The graphical images may include windows, fields, dialog boxes, menus, icons, buttons, cursors, scroll bars, etc. Such images may be arranged in predefined layouts, or may be created dynamically to serve the specific actions being taken by a user. During operation, the user can select and activate various graphical images in order to initiate functions and tasks associated therewith. By way of example, a user may select a button that opens, closes, minimizes, or maximizes a window, or an icon that launches a particular program. The GUI 969 can additionally or alternatively display information, such as non interactive text and graphics, for the user on the display device 968.

The system 950 can also includes one or more input devices 970 that are operatively coupled to the processor 956. The input devices 970 can be configured to transfer data from the outside world into the system 950. The input devices 970 may be integrated with the system 950 or they may be separate components (e.g., peripheral devices). In some cases, the input devices 970 may be connected to the system 950 through wired connections (e.g., cables/ports). In other cases, the input devices 970 may be connected to the system 50 through wireless connections. By way of example, the data link may correspond to PS/2, USB, IR, RF, Bluetooth or the like.

The input device(s) 970 may for example be used to perform tracking and to make selections with respect to the GUI 969 on the display 968. The input device 970 may also be used to issue commands in the system 950.

In one embodiment, the input devices 970 may include a touch sensing device configured to receive input from a user's touch and to send this information to the processor 56. By way of example, the touch-sensing device may correspond to a touchpad, a touch screen and/or a touch sensitive housing.

In many cases, the touch-sensing device can recognize touches (or near touches), as well as the position and magnitude of touches on a touch sensitive surface. The touch sensing means can report the touches to the processor 956 and the processor 956 can interpret the touches in accordance with its programming. For example, the processor 956 may initiate a task in accordance with a particular touch. A dedicated processor can be used to process touches locally and reduce demand for the main processor of the computer system. The touch sensing device may be based on sensing technologies including but not limited to capacitive sensing, resistive sensing, surface acoustic wave sensing, pressure sensing, optical sensing, and/or the like.

Furthermore, the touch sensing means may be based on single point sensing or multipoint sensing. Single point sensing is capable of only distinguishing a single touch, while multipoint sensing is capable of distinguishing multiple touches that occur at the same time. Alternatively or additionally, proximity sensing devices may be used. Proximity sensing devices are capable of sensing objects in space rather than on a touch surface.

In one embodiment, the input devices 970 can include a multipoint input device. Multipoint input devices have advantages over conventional single point devices in that they can distinguish more than one object (finger) at the same time. By way of example, a multipoint device, which can be used herein, is shown and described in greater detail in U.S. Patent Application No.: 10/840,862 and 11/015,434, both of which are herein incorporated by reference.

In accordance with one embodiment of the present invention, the system 950 can be designed to recognize gestures 985 applied to one or more of the input devices 970 (particularly touch devices) and to control aspects of the system 950 based on the gestures 985. As previously noted, a gesture may be defined as a stylized interaction with an input device that is mapped to one or more specific computing operations. The gestures 985 may be made through various hand, and more particularly finger motions. Alternatively or additionally, the gestures may be made with a stylus. In all of these cases, at least one of the input devices 970 such as a touch device can receives the gestures 985 and the processor 956 can execute instructions to carry out operations associated with the gestures 985. In addition, the memory block 958 may include a gesture operational program 988, which may be part of the operating system or a separate application. The gestural operation program 988 can include a set of instructions that recognizes the occurrence of gestures 985 and informs one or more software agents of the gestures 985 and/or what action(s) to take in response to the gestures 985.

When a user performs one or more gestures, the input device 970 can relay gesture information to the processor 956. Using instructions from memory 958, and more particularly, the gestural operational program 988, the processor 956 can interpret the gestures 985 and controls different components of the system 950, such as memory 958, a display 968 based on the gestures 985. The gestures 985 may be identified as commands for performing actions in applications stored in the memory 958, modifying GUI objects shown on the display 968, modifying data stored in memory 958, and/or for performing actions in I/O devices. By way of example, the commands may be associated with zooming, panning, scrolling, paging, rotating, sizing, and the like. As further examples, the commands may also be associated with launching a particular program, opening a file or document, viewing a menu, making a selection, executing instructions, logging onto the computer system, permitting authorized individuals access to restricted areas of the computer system, loading a user profile associated with a user's preferred arrangement of the computer desktop, and/or the like.

In one embodiment, the number of fingers in contact with the input device may indicate an input mode. For example, a single touch as for example by a single finger may indicate the desire to perform tracking, i.e., pointer or cursor movements, or selections, whereas multiple touches as for example by a group of fingers may indicate the desire to perform other gestures. The number of fingers for implementing gesturing may be widely varied. By way of example, two fingers may indicate.a first input mode, three fingers may indicate a third input mode, etc. Alternatively, any number of fingers, i.e., more than one, may be used for the same input mode, which can include one ore more gesture controls. The orientation of the fingers may similarly be used to denote the desired mode. The profile of the finger may be detected to permit different modal operations based on whether the user has used his thumb or index finger, for example.

In one particular embodiment, a single finger can initiate tracking (or selection) and two or more fingers in close proximity to one another can initiate scrolling or panning. Two fingers can provide easy toggling between one and two fingers, i.e., the user can switch between modes very easily by simply picking or placing an additional finger. This has the advantage of being more intuitive than other forms of mode toggling. During tracking, cursor movement can be controlled by the user moving a single finger on the touch sensitive surface of a touch sensing device. The sensor arrangement of the touch sensing device can interpret the finger motion and generate signals for producing corresponding movement of the cursor on the display. During scrolling, screen movement can be controlled by the user moving dual fingers on the touch sensitive surface of the touch sensing device. When the combined fingers are moved in the vertical direction, the motion can be interpreted as a vertical scroll event, and when the combined fingers are moved in the horizontal direction, the motion can be interpreted as a horizontal scroll event. The same can be said for panning although panning can occur in all directions rather than just the horizontal and vertical directions.

The embodiments described herein can be implemented by hardware, software or a combination of hardware and software. The software can also be embodied as computer readable code on a computer readable medium. The computer readable medium is any data storage device that can store data which can thereafter be read by a computer system. Examples of the computer readable medium include read-only memory, random-access memory, CD-ROMs, DVDs, magnetic tape, optical data storage devices, and carrier waves. The computer readable medium can also be distributed over network-coupled computer systems so that the computer readable code is stored and executed in a distributed fashion.

While this invention has been described in terms of several embodiments, there are alterations, permutations, and equivalents, which fall within the scope of this invention. For example, although the invention is primarily directed at touch devices, it should be noted that the invention may also be implemented with proximity sensing devices. In addition, methods may be implemented to automatical ly synching gesture preferences across multiple devices. For example, when a palm device is connected to a host computer. It should also be noted that there are many alternative ways of implementing the methods and apparatuses of the present invention. For example, although the invention has been primarily directed at methods associated with multipoint sensing devices, it should be noted that some of the methods may be directed at single point sensing devices. It is therefore intended that the following appended claims be interpreted as including all such alterations, permutations, and equivalents as fall within the true spirit and scope of the present invention.
Although the invention can be defined as stated in the attached claims, it is to be understood that the present invention can alternatively also be defined as stated in the following embodiments:
1. An electronic system, comprising:
   a multipoint sensing device that provides a multipoint sensing area for receiving inputs from one or more objects;
   a gesture module configured to determine a gesture set for a given input arrangement received by the multipoint sensing area of the multipoint sensing device, to monitor the given input arrangement for one or more gesture events included in the gesture set, and to initiate input actions associated with a gesture event when the gesture event is performed with the input arrangement.
2. The electronic system as recited in embodiment 1 wherein the multipoint sensing device is a touch sensing device.
3. The electronic system as recited in embodiment 1 wherein the multipoint sensing device is a proximity sensing device.
4. The electronic system as recited in embodiment 1 wherein the gesture module is implemented by hardware, software or a combination of hardware and software.
5. The electronic system as recited in embodiment 1 wherein the electronic system is associated with a computer system including desktops, laptops, tablets or handheld computers.
6. The electronic system as recited in embodiment 1 wherein the electronic system is associated with handheld consumer electronic devices including cell phones, PDAs, or dedicated media players.
7. The electronic system as recited in embodiment 1 wherein the gesture set is also determined by one or more factors including location of the input arrangement within the sensing area, an open application, a state of the open application, input functionality, or additional input characteristics.
8. The electronic system as recited in embodiment 1 wherein the input actions are state commands.
9. The electronic system as recited in embodiment 1 wherein the input actions are manipulative commands.
10. The electronic system as recited in embodiment 1 wherein the gesture events are performed by the input arrangement.
11. The electronic system as recited in embodiment 1 wherein the gesture events are performed by a subset of the input arrangement.
12. The electronic system as recited in embodiment 1 wherein determining the gesture set includes recognizing a specific input arrangement, and wherein monitoring the given input arrangement includes recognizing gesture events associated with the gesture set.
13. The electronic system as recited in embodiment 12 wherein recognizing the gesture events includes analyzing characteristics of each input of the input arrangement, identifying a specific pattern associated with the input arrangement, and referring to the gesture set to see if the specific pattern matches a gesture event associated with the gesture set.
14. The electronic system as recited in embodiment 1 wherein gesture events are associated with touches which can be selected from motions, taps, pressure, and dwells.
15. The electronic system as recited in embodiment 14 wherein motions are selected from sliding, swiping, flicking, and rotation.
16. The electronic system as recited in embodiment 14 wherein motions are contraction or expansion between two or more inputs.
17. The electronic system as recited in embodiment 14 wherein taps are selected from Vi tap, full tap, multiple tap, quick tap and slow tap.
18. The electronic system as recited in embodiment 14 wherein pressure is associated with hard and light presses.
19. The electronic system as recited in embodiment 14 wherein dwell is associated with a long or short stationary pause.
20. The electronic system as recited in embodiment 14 wherein the gesture set is composed of a matrix of different gesture events and different commands.
21. The electronic system as recited in embodiment 20 wherein the gesture set is composed of a 3 x 3 matrix of 9 different gesture events and 9 different commands.
22. The electronic system as recited in embodiment 20 wherein the 9 different gesture events include rotate CCW, rotate CW, spread, contract, left swipe, right swipe, up swipe, down swipe, and tap.
23. A gestural control method, comprising:
   detecting multiple points within a sensing area at the same time;
   determining a chord when one or more points are detected within the sensing area, the chord being a specific arrangement of points within the sensing area;
   determining a gesture set associating commands to one or more gesture events;
   monitoring points for gesture events; and
   if a gesture event is recognized, performing command associated with gesture event.
24. The method as recited in embodiment 23 wherein the points are associated with touches that occur on a touch sensitive surface.
25. The method as recited in embodiment 23 wherein the points are associated with near touches that occur over a surface
26. The method as recited in embodiment 23 wherein the chord is made with mechanical features.
27. The method as recited in embodiment 23 wherein the chord is made with all or portions of one or more hands.
28. The method as recited in embodiment 23 wherein the chord is based on a number of unknown points.
29. The method as recited in embodiment 23 wherein the chord is based on a specific arrangement of known points.
30. The method as recited in embodiment 23 wherein the chord is based on whether the points are close together, in a neutral position or spread apart.
31. The method as recited in embodiment 23 wherein the chords are based on whether the contacts are adjacent or offset one another.
32. The method as recited in embodiment 23 wherein the chords are based on whether they are from the left or right hand.
33. The method as recited in embodiment 23 wherein determining the chord includes analyzing image created by objects touching or near touching the sensing area, and recognizing a specific arrangement of points from the image.
34. The method as recited in embodiment 23 wherein the gesture set is based on the chord.
35. The method as recited in embodiment 34 wherein the gesture set is also based on additional factors including location of the chord, open applications, state or more of the application, and/or characteristics of the points.
36. The method as recited in embodiment 23 wherein the gesture set is a associated with an input functionality.
37. The method as recited in embodiment 36 wherein the input functionality is selected from navigating operations, file operations, edit operations, viewing operations, formatting operations, tool operations, or web browsing operations.
38. The method as recited in embodiment 37 wherein the commands are selected from state commands and manipulative commands.
39. The method as recited in embodiment 23 wherein recognizing gesture events including analyzing characteristics of the points, identifying a specific pattern and referring to the gesture set and its list of gesture events, if a pattern matches a gesture event of the gesture set then the pattern is presumed to be the gesture event.
40. The method as recited in embodiment 39 wherein the characteristics of the points include first order considerations including motion, tapping, pressure or dwell, and second order considerations including speed, directions, orientation, size, duration, shape, or length.
41. The method as recited in embodiment 23 wherein gesture events are associated with motions, taps, pressure, and dwells.
42. The method as recited in embodiment 41 wherein motions are selected from sliding, swiping, flicking, and rotation.
43. The method as recited in embodiment 41 wherein motions are contraction or expansion between two or more inputs.
44. The method as recited in embodiment 41 wherein taps are selected from Vz tap, full tap, multiple tap, quick tap and slow tap.
45. The method as recited in embodiment 41 wherein pressure is associated with hard and light presses.
46. The method as recited in embodiment 41 wherein dwell is associated with a long or short stationary pause.
47. The method as recited in embodiment 23 wherein the gesture set is composed of a matrix of different gesture events and different commands.
48. The method as recited in embodiment 47 wherein the gesture set is composed of a 3 x 3 matrix of 9 different gesture events and 9 different commands.
49. The method as recited in embodiment 48 wherein the 9 different gesture events include rotate CCW, rotate CW, spread, contract, left swipe, right swipe, up swipe, down swipe, and tap.
50. The method as recited in embodiment 23 further including determining whether or not a switching event has been performed, a switching event refers to an event that rests the operation or initiates a chord change.
51. The method as recited in embodiment 23 wherein the switching event is implemented by one of the following operations: a) removing all points from sensing area for a predetermined amount of time, b) changing the chord, c) adding/subtracting points from sensing area, d) holding the points stationary for a predetermined amount of time, e) detecting a specific a key entry or button click, or f) detecting a gesture event.
52. A control operation, comprising:
   detecting a touch or near touch;
   if a touch is detected, determining a gesture set for the touch, the gesture set including one or more gesture events for provoking or initiating a command;
   monitoring the touch for a gesture event associated with the gesture set;
   and initiating a command when a gesture event associated with the gesture set is performed.
53. The operation as recited in embodiment 53 wherein the gesture set depends on touch characteristics, touch location, open application, and/or mode of application.
54. The operation as recited in embodiment 54 wherein the touch or near touch is detected via a touch device such as a touch pad, touch screen or touch sensitive housing.
55. A gesture operation, comprising:
   monitor a touch motion;
   differentiating the touch motion between first and second states;
   performing a first action if the touch motion is associated with the first state; and
   performing a second action if the touch motion is associated with the second state.
56. The gesture operation as recited in embodiment 55 wherein the touch motion is a sliding motion, and wherein the first state is a flick, and the second state is a swipe.
57. A control operation, comprising:
   providing a first input device and a second input device, the first input device including a touch sensitive surface;
   monitoring the first input device for input events;
   simultaneously monitoring the second input device for input events;
   performing input operations in accordance with input events associated with the first input device;
   simultaneously perform ing input operations in accordance with input events associated with the second input device.
58. The control operation as recited in embodiment 57 wherein the first input device is a mouse.
59. A control operation, comprising:
   providing a list of input functions, the input function having commands and gesture events that are linked to the commands; the commands are related to the input function;
   assigning input functions to chords; and
   linking the input function to chord when the chord is recognized.
60. The control operation as recited in embodiment 59 wherein the input function is selected from navigating operations, file operations, edit operations, viewing operations, formatting operations, tool operations, or web browsing operations.
61. The control operation as recited in embodiment 59 wherein the gesture events are actions that are performed by the chord.
62. The control operation as recited in embodiment 59 wherein the gesture events are selected from rotations, translations as a group, translation relative to one another, and/or taps.
63. The control operation as recited in embodiment 59 wherein the gesture events are linked to commands in an intuitive manner.
64. The control operation as recited in embodiment 59 wherein complimentary commands and linked to complimentary gesture events.
65. The control operation as recited in embodiment 59 wherein a chord is an arrangement of fingers.
66. The control operation as recited in embodiment 59 wherein assigning input functions to chords includes selecting an input function from a menu of input functions, and then selecting a chord from a menu list of chords.
67. A control panel, comprising:
   displaying a menu of input functions;
   displaying a gesture set that shows commands associated with a selected input function, and gesture events assigned to the commands;
   displaying a list of chords,
   wherein in order to set up a gesture map, a user selects desired input function from list of input functions and selects a desired chord from the list of chords.
68. A gesture design process, comprising:
   ranking chords from easiest to hardest to perform;
   ranking frequency of operations from most frequent to less frequent;
   substantially matching the easiest chords with the most frequent operations, and matching the hardest chords with the less frequent operations; and
   fine tuning the chord/operation grouping.
69. The process as recited in embodiment 68 wherein chords are ranked based on one or more attributes selected from speed, reliability, comfort, ease of use, simplicity or size of sensing area.
70. The process as recited in embodiment 68 wherein fine tuning is based one or more factors including complimentary commands, intuitiveness, cross talk, or organization.
71. A gesture operation, comprising:
   detecting a first finger;
   determining the state of the finger;
   detecting one or more additional fingers;
   determining the state of additional fingers; and
   implementing different input modes based on timing of states of the first and additional fingers relative to one another.
72. The gesture operation as recited in embodiment 71 wherein if the first finger is in a first state of two states when the additional fingers are in a first state of two states then a first input mode is implemented, otherwise a second input mode is implemented. 73. The gesture operation as recited in embodiment 71 wherein the state of the first finger includes moving or stationary, and wherein the state of the additional fingers includes present or not, and wherein if the first finger is moving then a pointing input mode is implemented, and if the first finger is stationary when the additional fingers are present then a dragging mode is implemented.

## Claims

1. An electronic system, comprising:
a touch sensing device that provides a touch sensing area adapted to detect a touch by an object and a subsequent swipe event in the touch sensing area; and
a gesture module configured to recognize the object to be a side of a digit and perform a command associated with a swipe event caused by the side of the digit.

2. The electronic system of claim 1, wherein the digit comprises a thumb or a pinky.

3. The electronic system of claim 1, wherein the gesture module is also configured to classify a horizontally eccentric yet thin contact as a flattened thumb or a side of a pinky.

4. The electronic system of claim 1, wherein the command is for one of adjusting a volume, initiating a sleep mode, and initiating a screensaver.

5. A gestural control method, comprising:
detecting a touch by an object and a subsequent swipe event in a touch sensing area of a touch sensing device;
recognizing the object to be a side of a digit; and
performing a command associated with a swipe event caused by the side of the digit.

6. The gestural control method of claim 5, wherein the digit comprises a thumb or a pinky.

7. The gestural control method of claim 5, wherein the gesture module is also configured to classify a horizontally eccentric yet thin contact as a flattened thumb or a side of a pinky.

8. The gestural control method of claim 5, wherein the command is for one of adjusting a volume, initiating a sleep mode, and initiating a screensaver.
